# EUROPEAN PATENT APPLICATION

(11) **EP 4 645 631 A1**
(43) Date of publication of application: **05.11.2025**
(21) Application number: 23913958.7
(22) Date of filing: 04.01.2023
(51) Int. Cl.: H02J 7/00

(54) **BATTERY HEATING METHOD, BATTERY HEATING CIRCUIT AND ELECTRIC DEVICE**

(71) Applicant: Contemporary Amperex Technology Co., Limited, Ningde, Fujian 352100 (CN)
(72) Inventor: HUANG, Xiaojian, Ningde, Fujian 352100 (CN); CHEN, Xing, Ningde, Fujian 352100 (CN); YAN, Yu, Ningde, Fujian 352100 (CN); OUYANG, Shaocong, Ningde, Fujian 352100 (CN); WANG, Kexin, Ningde, Fujian 352100 (CN)
(74) Representative: Ziebig Hengelhaupt Intellectual Property Attorneys Patentanwaltskanzlei PartGmbB
(86) International application number: PCT/CN2023/070256
(87) International publication number: WO 2024/145799

(57) **Abstract**

This application relates to a battery heating method, a battery heating circuit, and an electric device. The method includes: acquiring a heating enable signal indicating that a motor is to heat a battery based on a heating circuit, and controlling switching states of switching transistors in a switch circuit in response to the heating enable signal, so as to generate a half-wave current in the motor to heat the battery, where a current waveform of each phase stator winding during the motor-based battery heating process is a half-wave current waveform, thereby increasing current harmonics in stator windings of the motor and dispersing vibration noise energy during the motor-based battery heating process. Thus, as compared to conventional technologies, the vibration noise during the motor-based battery heating process in the embodiments of this application is reduced, thereby alleviating the vibration noise issue during the motor-based battery heating process.

## Description

### TECHNICAL FIELD

This application relates to the field of motor technologies, and more particularly, to a battery heating method, a battery heating circuit, and an electric device.

### BACKGROUND

With the rapid development of new energy technologies, the number of new energy electric devices continues to increase. During the use of new energy electric devices, it is sometimes necessary to control a motor to heat a battery, but the heating process generates significant noise.

In conventional technologies, the addition of a motor neutral point is employed to alleviate the issue of substantial vibration noise during the motor pulse heating process. However, even with the addition of a motor neutral point, significant vibration noise persists during the motor-based battery heating process in conventional technologies.

### SUMMARY

In view of the above issues, this application provides a battery heating method, a battery heating circuit, and an electric device, so as to address the problem of substantial vibration noise during the motor-based battery heating process in conventional technologies.

According to a first aspect, this application provides a battery heating method, the method including:
acquiring a heating enable signal, where the heating enable signal is configured to indicate that a motor is to heat a battery based on a heating circuit, the heating circuit including the motor, the battery, and a switch circuit respectively connected to the motor and the battery;
controlling switching states of switching transistors in the switch circuit in response to the heating enable signal, so as to generate a half-wave current in the motor to heat the battery.

In the technical solution of the embodiments of this application, a heating enable signal configured to indicate that the motor is to heat the battery based on the heating circuit is acquired, and the switching states of the switching transistors in the switch circuit are controlled in response to the heating enable signal, to generate a half-wave current in the motor to heat the battery, where a current waveform of each phase stator winding during the motor-based battery heating process is a half-wave current waveform, thereby increasing current harmonics in stator windings of the motor and dispersing vibration noise energy during the motor-based battery heating process. Thus, as compared to conventional technologies, the vibration noise during the motor-based battery heating process in the embodiments of this application is reduced, thereby alleviating the vibration noise issue during the motor-based battery heating process.

In some embodiments, a cycle of the half-wave current includes: a stator winding energy storage stage in which the current gradually increases, a stator winding freewheeling stage in which the current remains constant, a stator winding discharge stage in which the current gradually decreases, and a stator winding current dead-time stage in which the current is zero.

In the technical solution of the embodiments of this application, a current direction in each phase stator winding during the motor-based battery heating process remains constant, that is, the current waveform of each phase stator winding is a half-wave current waveform, which can increase the current harmonics in the stator windings of the motor, thereby dispersing the vibration noise energy during the motor-based battery heating process. In addition, in the embodiments of this application, with the dead-time duration of the motor in the stator winding current dead-time stage being controlled, an effective value of the current of the stator winding can be reduced without changing an effective value of the battery current waveform, thereby further reducing motor noise.

In some embodiments, during the stator winding current dead-time stage in which the current is zero, a capacitor in the heating circuit charges the battery, where the capacitor is connected in series across the terminals of the battery.

In some embodiments, the switch circuit includes three inverter bridge arms disposed between the motor and the battery and respectively connected to the three-phase stator winding of the motor and a capacitor connected in parallel with the three inverter bridge arms, each inverter bridge arm including: an upper bridge arm switching transistor and a lower bridge arm switching transistor; where
when the motor is in a stator winding energy storage stage, an upper bridge arm switching transistor in a target inverter bridge arm among the three inverter bridge arms is in the on state, and lower bridge arm switching transistors in other inverter bridge arms are in the on state;
when the motor is in a stator winding freewheeling stage, the upper bridge arm switching transistor in the target inverter bridge arm switches to the off state, and the lower bridge arm switching transistors in the other inverter bridge arms remain in the on state;
when the motor is in a stator winding discharge stage, the lower bridge arm switching transistors in the other inverter bridge arms switch to the off state; and
when the motor is in a stator winding current dead-time stage, the lower bridge arm switching transistors in the other inverter bridge arms remain in the off state.

In the technical solution of the embodiments of this application, during different stages of the motor, the switching states of the switching transistors in the three inverter bridge arms vary, so that the current waveform of each phase stator winding during the motor-based battery heating process is a half-wave current waveform, thereby increasing the current harmonics in the stator windings of the motor, dispersing the vibration noise energy during the motor-based battery heating process, and thus alleviating the vibration noise issue during the motor-based battery heating process.

In some embodiments, the controlling switching states of switching transistors in the switch circuit in response to the heating enable signal includes:
controlling the upper bridge arm switching transistor in the target inverter bridge arm to be in the on state and the lower bridge arm switching transistors in the other inverter bridge arms to be in the on state, forming a discharge path from the battery to the motor, so that the motor is in the stator winding energy storage stage;
upon detecting that an operating state of the motor satisfies a preset freewheeling condition, controlling the upper bridge arm switching transistor in the on state to switch to the off state to disconnect the discharge path from the battery to the motor, so that the motor is in the stator winding freewheeling stage;
upon detecting that a duration of the freewheeling stage exceeds a preset freewheeling duration, controlling the lower bridge arm switching transistors in the on state to switch to the off state, forming a charging path from the motor to the battery, so that the motor is in the stator winding discharge stage; and
upon detecting that energy stored in the stator windings of the motor is fully released, controlling the lower bridge arm switching transistors to remain in the off state, forming an energy oscillation path between the capacitor and the battery, so that the motor is in the stator winding current dead-time stage.

In the technical solution of the embodiments of this application, with the switching states of the upper bridge arm switching transistor in the target inverter bridge arm and the lower bridge arm switching transistors in the other inverter bridge arms among the three inverter bridge arms being controlled, the motor heats the battery while maintaining the current direction in each phase stator winding unchanged, thereby increasing the current harmonics in the stator windings of the motor and dispersing the vibration noise energy during the motor-based battery heating process. In addition, the controller can further reduce motor noise by controlling the dead-time duration of the motor in the stator winding current dead-time stage, reducing the effective value of the current of the stator winding without changing the effective value of the battery current waveform. Thus, as compared to conventional technologies, motor noise can be effectively reduced in the embodiments of this application while ensuring the original battery heating effect remains unchanged.

In some embodiments, before the controlling the upper bridge arm switching transistor in the target inverter bridge arm to be in the on state and the lower bridge arm switching transistors in the other inverter bridge arms to be in the on state, the method further includes:
determining the target inverter bridge arm based on a rotor position of the motor.

In some embodiments, the determining the target inverter bridge arm based on a rotor position of the motor includes:
acquiring space vector data, the switch state space vector data including a plurality of space sectors, where each space sector corresponds to different switch state information;
determining a first space sector in which a rotor of the motor is located and a second space sector symmetrical to the first space sector; and
determining the target inverter bridge arm based on switch state information corresponding to the first space sector and the second space sector.

In some embodiments, the switch circuit includes: a neutral bridge arm disposed between a neutral line of the motor and the battery, three inverter bridge arms disposed between the motor and the battery and respectively connected to the three-phase stator winding of the motor, and a capacitor connected in parallel with the three inverter bridge arms, each inverter bridge arm including: an upper bridge arm switching transistor and a lower bridge arm switching transistor, and the neutral bridge arm including an upper bridge arm switching transistor and a lower bridge arm switching transistor; where
when the motor is in a stator winding energy storage stage, the upper bridge arm switching transistor in each of the inverter bridge arms is in the on state, and the lower bridge arm switching transistor in the neutral bridge arm is in the on state; or the lower bridge arm switching transistor in each of the inverter bridge arms is in the on state, and the upper bridge arm switching transistor in the neutral bridge arm is in the on state;
when the motor is in a stator winding freewheeling stage, the upper bridge arm switching transistor in each of the inverter bridge arms switches to the off state, and the lower bridge arm switching transistor in the neutral bridge arm remains in the on state; or the lower bridge arm switching transistor in each of the inverter bridge arms switches to the off state, and the upper bridge arm switching transistor in the neutral bridge arm remains in the on state;
when the motor is in a stator winding discharge stage, the lower bridge arm switching transistor in the neutral bridge arm switches to the off state; or the upper bridge arm switching transistor in the neutral bridge arm switches to the off state; and
when the motor is in a stator winding current dead-time stage, the lower bridge arm switching transistor in the neutral bridge arm remains in the off state; or the upper bridge arm switching transistor in the neutral bridge arm remains in the off state.

In the technical solution of the embodiments of this application, during different stages of the motor, the switching states of the switching transistors in the three inverter bridge arms and the neutral bridge arm vary, so that the current waveform of each phase stator winding during the motor-based battery heating process is a half-wave current waveform, thereby increasing the current harmonics in the stator windings of the motor, dispersing the vibration noise energy during the motor-based battery heating process, and thus alleviating the vibration noise issue during the motor-based battery heating process.

In some embodiments, the controlling switching states of switching transistors in the switch circuit in response to the heating enable signal includes:
controlling the upper bridge arm switching transistor in each of the inverter bridge arms to be in the on state and the lower bridge arm switching transistor in the neutral bridge arm to be in the on state, forming a discharge path from the battery to the motor, so that the motor is in the stator winding energy storage stage; or
controlling the lower bridge arm switching transistor in each of the inverter bridge arms to be in the on state and the upper bridge arm switching transistor in the neutral bridge arm to be in the on state, forming a discharge path from the battery to the motor, so that the motor is in the stator winding energy storage stage.

In some embodiments, the controlling switching states of switching transistors in the switch circuit in response to the heating enable signal includes:
upon detecting that an operating state of the motor satisfies a preset freewheeling condition, controlling the upper bridge arm switching transistor in each of the inverter bridge arms to switch to the off state to disconnect the discharge path from the battery to the motor, so that the motor is in the stator winding freewheeling stage; or
upon detecting that the operating state of the motor satisfies the preset freewheeling condition, controlling the lower bridge arm switching transistor in each of the inverter bridge arms to switch to the off state to disconnect the discharge path from the battery to the motor, so that the motor is in the stator winding freewheeling stage.

In some embodiments, the controlling switching states of switching transistors in the switch circuit in response to the heating enable signal includes:
upon detecting that a duration of the freewheeling stage exceeds a preset freewheeling duration, controlling the lower bridge arm switching transistor in the neutral bridge arm to switch to the off state, forming a charging path from the motor to the battery, so that the motor is in the stator winding discharge stage; or
upon detecting that the duration of the freewheeling stage exceeds the preset freewheeling duration, controlling the upper bridge arm switching transistor in the neutral bridge arm to switch to the off state, forming a charging path from the motor to the battery, so that the motor is in the stator winding discharge stage.

In some embodiments, the controlling switching states of switching transistors in the switch circuit in response to the heating enable signal includes:
upon detecting that energy stored in the stator windings of the motor is fully released, controlling the lower bridge arm switching transistor in the neutral bridge arm to remain in the off state, forming an energy oscillation path between the capacitor and the battery, so that the motor is in the stator winding current dead-time stage; or
upon detecting that the energy stored in the stator windings of the motor is fully released, controlling the upper bridge arm switching transistor in the neutral bridge arm to remain in the off state, forming an energy oscillation path between the capacitor and the battery, so that the motor is in the stator winding current dead-time stage.

In some embodiments, the acquiring a heating enable signal includes:
upon detecting that a battery heating condition is satisfied and the motor is in a non-operating state, generating the heating enable signal; or
receiving the heating enable signal sent by a vehicle controller, where the heating enable signal is sent by the vehicle controller upon receiving a heating request from a battery management system BMS and detecting that the motor is in a non-operating state.

In some embodiments, the method further includes:
upon detecting that a temperature of the battery is abnormal or the temperature of the battery reaches a preset temperature, controlling the switching transistors in the switch circuit to be in the off state.

In some embodiments, the method further includes:
upon receiving a battery temperature abnormality signal or a stop heating enable signal sent by the vehicle controller, controlling the switching transistors in the switch circuit to be in the off state.

According to a second aspect, this application provides a battery heating circuit, the battery heating circuit including: a heating circuit and a controller, where the heating circuit includes a motor, a battery, and a switch circuit respectively connected to the motor and the battery; and
the controller is configured to, upon acquiring a heating enable signal, control switching states of switching transistors in the switch circuit in response to the heating enable signal, so as to generate a half-wave current in the motor to heat the battery, where the heating enable signal is configured to indicate that the motor is to heat the battery based on the heating circuit.

In some embodiments, a cycle of the half-wave current includes: a stator winding energy storage stage in which the current gradually increases, a stator winding freewheeling stage in which the current remains constant, a stator winding discharge stage in which the current gradually decreases, and a stator winding current dead-time stage in which the current is zero.

In some embodiments, during the stator winding current dead-time stage in which the current is zero, a capacitor in the heating circuit charges the battery, where the capacitor is connected in series across the terminals of the battery.

In some embodiments, the switch circuit includes three inverter bridge arms disposed between the motor and the battery and respectively connected to the three-phase stator winding of the motor and a capacitor connected in parallel with the three inverter bridge arms, each inverter bridge arm including: an upper bridge arm switching transistor and a lower bridge arm switching transistor; where
when the motor is in a stator winding energy storage stage, an upper bridge arm switching transistor in a target inverter bridge arm among the three inverter bridge arms is in the on state, and lower bridge arm switching transistors in other inverter bridge arms are in the on state;
when the motor is in a stator winding freewheeling stage, the upper bridge arm switching transistor in the target inverter bridge arm switches to the off state, and the lower bridge arm switching transistors in the other inverter bridge arms remain in the on state;
when the motor is in a stator winding discharge stage, the lower bridge arm switching transistors in the other inverter bridge arms switch to the off state; and
when the motor is in a stator winding current dead-time stage, the lower bridge arm switching transistors in the other inverter bridge arms remain in the off state.

In some embodiments, the controller is specifically configured to:
control the upper bridge arm switching transistor in the target inverter bridge arm to be in the on state and the lower bridge arm switching transistors in the other inverter bridge arms to be in the on state, forming a discharge path from the battery to the motor, so that the motor is in the stator winding energy storage stage;
upon detecting that an operating state of the motor satisfies a preset freewheeling condition, control the upper bridge arm switching transistor in the on state to switch to the off state to disconnect the discharge path from the battery to the motor, so that the motor is in the stator winding freewheeling stage;
upon detecting that a duration of the freewheeling stage exceeds a preset freewheeling duration, control the lower bridge arm switching transistors in the on state to switch to the off state, forming a charging path from the motor to the battery, so that the motor is in the stator winding discharge stage to heat the battery; and
upon detecting that energy stored in the stator windings of the motor is fully released, control the lower bridge arm switching transistors to remain in the off state, forming an energy oscillation path between the capacitor and the battery, so that the motor is in the stator winding current dead-time stage.

In some embodiments, the controller is further configured to:
determine the target inverter bridge arm based on a rotor position of the motor.

In some embodiments, the controller is specifically configured to:
acquire space vector data, the switch state space vector data including a plurality of space sectors, where each space sector corresponds to different switch state information;
determine a first space sector in which a rotor of the motor is located and a second space sector symmetrical to the first space sector; and
determine the target inverter bridge arm based on switch state information corresponding to the first space sector and the second space sector.

In some embodiments, the switch circuit includes: a neutral bridge arm disposed between a neutral line of the motor and the battery, three inverter bridge arms disposed between the motor and the battery and respectively connected to the three-phase stator winding of the motor, and a capacitor connected in parallel with the three inverter bridge arms, each inverter bridge arm including: an upper bridge arm switching transistor and a lower bridge arm switching transistor, and the neutral bridge arm including an upper bridge arm switching transistor and a lower bridge arm switching transistor; where
when the motor is in the stator winding energy storage stage, the upper bridge arm switching transistor in each of the inverter bridge arms is in the on state, and the lower bridge arm switching transistor in the neutral bridge arm is in the on state; or the lower bridge arm switching transistor in each of the inverter bridge arms is in the on state, and the upper bridge arm switching transistor in the neutral bridge arm is in the on state;
when the motor is in the stator winding freewheeling stage, the upper bridge arm switching transistor in each of the inverter bridge arms switches to the off state, and the lower bridge arm switching transistor in the neutral bridge arm remains in the on state; or the lower bridge arm switching transistor in each of the inverter bridge arms switches to the off state, and the upper bridge arm switching transistor in the neutral bridge arm remains in the on state;
when the motor is in the stator winding discharge stage, the lower bridge arm switching transistor in the neutral bridge arm is in the off state; or the upper bridge arm switching transistor in the neutral bridge arm is in the off state; and
when the motor is in the stator winding current dead-time stage, the lower bridge arm switching transistor in the neutral bridge arm remains in the off state; or the upper bridge arm switching transistor in the neutral bridge arm remains in the off state.

In some embodiments, the controller is specifically configured to:
control the upper bridge arm switching transistor in each of the inverter bridge arms to be in the on state and the lower bridge arm switching transistor in the neutral bridge arm to be in the on state, forming a discharge path from the battery to the motor, so that the motor is in the stator winding energy storage stage; or
control the lower bridge arm switching transistor in each of the inverter bridge arms to be in the on state and the upper bridge arm switching transistor in the neutral bridge arm to be in the on state, forming a discharge path from the battery to the motor, so that the motor is in the stator winding energy storage stage.

In some embodiments, the controller is specifically configured to:
upon detecting that an operating state of the motor satisfies a preset freewheeling condition, control the upper bridge arm switching transistor in each of the inverter bridge arms to switch to the off state to disconnect the discharge path from the battery to the motor, so that the motor is in the stator winding freewheeling stage; or
upon detecting that the operating state of the motor satisfies the preset freewheeling condition, control the lower bridge arm switching transistor in each of the inverter bridge arms to switch to the off state to disconnect the discharge path from the battery to the motor, so that the motor is in the stator winding freewheeling stage.

In some embodiments, the controller is specifically configured to:
upon detecting that a duration of the freewheeling stage exceeds a preset freewheeling duration, control the lower bridge arm switching transistor in the neutral bridge arm to switch to the off state, forming a charging path from the motor to the battery, so that the motor is in the stator winding discharge stage; or
upon detecting that the duration of the freewheeling stage exceeds the preset freewheeling duration, control the upper bridge arm switching transistor in the neutral bridge arm to switch to the off state, forming a charging path from the motor to the battery, so that the motor is in the stator winding discharge stage.

In some embodiments, the controller is specifically configured to:
upon detecting that energy stored in the stator windings of the motor is fully released, control the lower bridge arm switching transistor in the neutral bridge arm to remain in the off state, forming an energy oscillation path between the capacitor and the battery, so that the motor is in the stator winding current dead-time stage; or
upon detecting that the energy stored in the stator windings of the motor is fully released, control the upper bridge arm switching transistor in the neutral bridge arm to remain in the off state, forming an energy oscillation path between the capacitor and the battery, so that the motor is in the stator winding current dead-time stage.

In some embodiments, the switching transistors in the switch circuit include: insulated gate bipolar transistors IGBT or silicon carbide transistors.

In some embodiments, the controller is specifically configured to:
upon detecting that a battery heating condition is satisfied and the motor is in a non-operating state, generate the heating enable signal; or
receive the heating enable signal sent by a vehicle controller, where the heating enable signal is sent by the vehicle controller upon receiving a heating request from a battery management system BMS and detecting that the motor is in a non-operating state.

In some embodiments, the controller is further configured to:
upon detecting that a temperature of the battery is abnormal or the temperature of the battery reaches a preset temperature, control the switching transistors in the switch circuit to be in the off state; or
upon receiving a battery temperature abnormality signal or a stop heating enable signal sent by the vehicle controller, control the switching transistors in the switch circuit to be in the off state.

According to a third aspect, this application provides an electric device, the electric device including the battery heating circuit according to any embodiment of the second aspect described above.

The above description is merely an overview of the technical solutions of this application. To facilitate a clearer understanding of the technical means of this application, the solutions may be implemented in accordance with the content of the specification, and to make the above and other objectives, features, and advantages of this application more apparent and understandable, specific embodiments of this application are provided below.

### BRIEF DESCRIPTION OF DRAWINGS

Other advantages and benefits will become apparent to those of ordinary skill in the art by reading the following detailed descriptions of preferred embodiments. The drawings are provided solely for the purpose of illustrating the preferred embodiments and are not intended to limit this application. Throughout the drawings, identical components are denoted by identical reference signs. In the drawings:
FIG. 1A is a schematic diagram of an application environment according to an embodiment of this application;
FIG. 1B is a second schematic diagram of an application environment according to an embodiment of this application;
FIG. 2 is a flowchart of a battery heating method according to some embodiments of this application;
FIG. 3 is a schematic diagram of a current waveform of a stator winding according to some other embodiments of this application;
FIG. 4 is a schematic structural diagram of a battery heating circuit according to some embodiments of this application;
FIG. 5 is a schematic diagram of a space vector diagram according to an embodiment of this application;
FIG. 6 is a first schematic diagram of current flow when a motor is in a stator winding energy storage stage according to an embodiment of this application;
FIG. 7 is a first schematic diagram of current flow when a motor is in a stator winding freewheeling stage according to an embodiment of this application;
FIG. 8 is a first schematic diagram of current flow when a motor is in a stator winding discharge stage according to an embodiment of this application;
FIG. 9 is a flowchart of a battery heating method according to some other embodiments of this application;
FIG. 10 is a schematic structural diagram of a battery heating circuit according to some other embodiments of this application;
FIG. 11 is a second schematic diagram of current flow when a motor is in a stator winding energy storage stage according to an embodiment of this application;
FIG. 12 is a second schematic diagram of current flow when a motor is in a stator winding freewheeling stage according to an embodiment of this application;
FIG. 13 is a second schematic diagram of current flow when a motor is in a stator winding discharge stage according to an embodiment of this application;
FIG. 14 is a flowchart of a battery heating method according to some other embodiments of this application;
FIG. 15 is a flowchart of a battery heating method according to some other embodiments of this application; and
FIG. 16 is a schematic structural diagram of a battery heating circuit according to some other embodiments of this application.

### DESCRIPTION OF EMBODIMENTS

Embodiments of the technical solutions of this application will be described in detail below with reference to the accompanying drawings. The following embodiments are merely intended to provide a clearer description of the technical solutions of this application and are used as examples only, which do not limit the scope of protection of this application.

Unless otherwise defined, all technical and scientific terms used herein have the same meanings as commonly understood by those skilled in the technical field of this application; the terms used herein are for the purpose of describing specific embodiments only and are not intended to limit this application; the terms "include" and any variations thereof in the specification, claims, and the above description of the drawings of this application are intended to cover non-exclusive inclusion.

In the description of the embodiments of this application, the technical terms "first," "second," and the like are used only to distinguish different objects and should not be construed as indicating or implying relative importance or implicitly indicating the number, specific order, or primary-secondary relationship of the indicated technical features. In the description of the embodiments of this application, "a plurality of" means two or more (including two), unless otherwise explicitly and specifically defined.

In conventional technologies, the addition of a motor neutral point is employed to alleviate the issue of substantial vibration noise during the motor pulse heating process. However, even with the addition of a motor neutral point, significant vibration noise persists during the motor-based battery heating process in conventional technologies.

To reduce the vibration noise during the motor-based battery heating process, the applicants have found through research that increasing the current harmonics in the stator windings of the motor can disperse the vibration noise energy during the battery heating process, thereby reducing the sound pressure level of the vibration noise.

Based on the above considerations, to address the issue of vibration noise during the motor-based battery heating process in conventional technologies, the applicants, through research, proposes a battery heating method that controls switching states of switching transistors in a switch circuit connected to the motor, so as to generate a half-wave current in the motor to heat the battery, where a current waveform of each phase stator winding is a half-wave current waveform, thereby increasing the current harmonics in the stator windings of the motor and dispersing the vibration noise energy during the motor-based battery heating process. Thus, as compared to conventional technologies, the vibration noise during the motor-based battery heating process in the embodiments of this application is reduced.

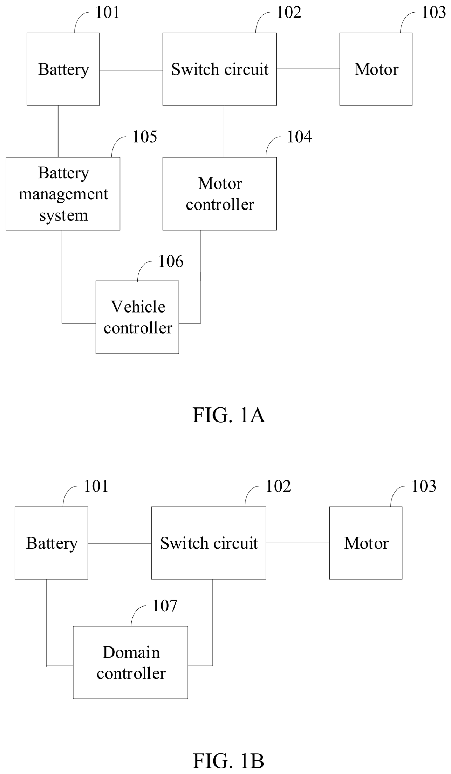

FIG. 1A is a first schematic diagram of an application environment according to an embodiment of this application. As shown in FIG. 1A, the application environment of the embodiment of this application may include but is not limited to: a battery 101, a switch circuit 102, a motor 103, a motor controller 104, a battery management system (Battery Management System, BMS) 105, and a vehicle controller 106. As an example, the motor controller 104 may include but is not limited to a motor control unit (Motor Control Unit, MCU).

As an example, when detecting a need to heat the battery 101, the BMS 105 sends a heating request to the vehicle controller 106, so that the vehicle controller 106 instructs the motor controller 104 to control the motor 103 to heat the battery 101. The motor controller 104 is configured to control switching states of switching transistors in the switch circuit 102 according to a battery heating method provided in embodiments of this application, to control the motor 103 to heat the battery 101.

FIG. 1B is a second schematic diagram of an application environment according to an embodiment of this application. As shown in FIG. 1B, the application environment of the embodiment of this application may include but is not limited to: a battery 101, a switch circuit 102, a motor 103, and a domain controller 107. The domain controller 107 may integrate functions of a motor controller, a BMS, and a vehicle controller.

As an example, when detecting a need to heat the battery 101, the domain controller 107 controls the motor 103 to heat the battery 101. The domain controller 107 is configured to control switching states of switching transistors in the switch circuit 102 according to the battery heating method provided in embodiments of this application, to control the motor 103 to heat the battery 101.

Any switching transistor involved in the embodiments of this application may include an insulated gate bipolar transistor (Insulated Gate Bipolar Transistor, IGBT) or a silicon carbide transistor; of course, other controllable switching transistors may also be included, and this is not limited in the embodiments of this application. It should be noted that any switching transistor involved in the embodiments of this application is a switching transistor including a body diode.

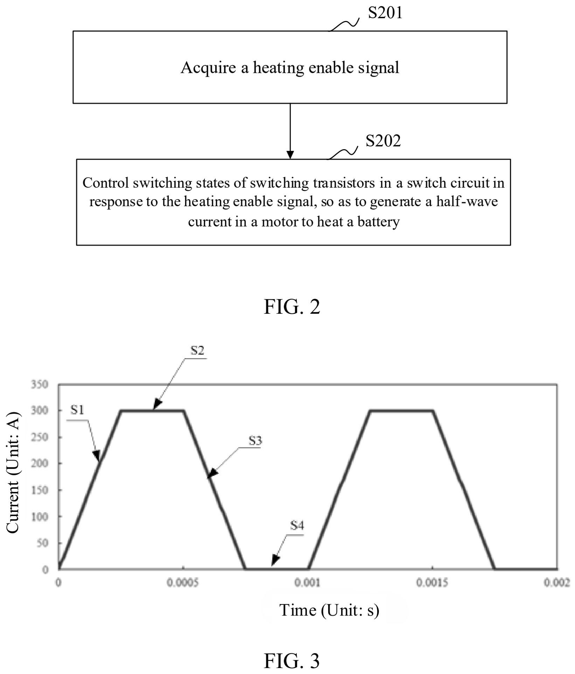

In some embodiments, FIG. 2 is a flowchart of a battery heating method according to some embodiments of this application. In the embodiments of this application, the method is described as being applied to a controller, where the controller may be the motor controller 104 in FIG. 1A or the domain controller 107 in FIG. 1B. As shown in FIG. 2, the method of the embodiments of this application may include the following steps.

Step S201: Acquire a heating enable signal.

A heating circuit involved in the embodiments of this application may include but is not limited to: a motor, a battery, and a switch circuit respectively connected to the motor and the battery, where the switch circuit is configured to adjust a current path between the battery and the motor under the control of the controller, so as to generate a half-wave current in the motor to heat the battery.

In one possible implementation, if the motor includes a three-phase stator winding (excluding a neutral line), the switch circuit may include three inverter bridge arms disposed between the motor and the battery and respectively connected to the three-phase stator winding of the motor and a capacitor connected in parallel with the three inverter bridge arms, where the capacitor is connected in series across the terminals of the battery and provides a voltage stabilization function, a filtering function, and/or an energy storage function; of course, the switch circuit may also include other components, and this is not limited in the embodiments of this application. It should be understood that each inverter bridge arm in the embodiments of this application includes a plurality of switching transistors.

In another possible implementation, if the motor includes a three-phase stator winding and a neutral line, the switch circuit may include a neutral bridge arm disposed between the neutral line of the motor and the battery, three inverter bridge arms disposed between the motor and the battery and respectively connected to the three-phase stator winding of the motor, and a capacitor connected in parallel with the three inverter bridge arms, where the capacitor is connected in series across the terminals of the battery and provides a voltage stabilization function, a filtering function, and/or an energy storage function; of course, the switch circuit may also include other components, and this is not limited in the embodiments of this application. It should be understood that each of the inverter bridge arms and each neutral bridge arm in the embodiments of this application may include a plurality of switching transistors, respectively.

In this step, the controller may acquire a heating enable signal, where the heating enable signal is configured to indicate that the motor is to heat the battery based on the heating circuit.

In one possible implementation, if the controller is a motor controller, the controller may receive the heating enable signal sent by a vehicle controller, where the heating enable signal is sent by the vehicle controller upon receiving a heating request from a battery management system BMS and detecting that the motor is in a non-operating state.

As an example, the BMS may collect state parameters of the battery in real time, where the state parameters may include but are not limited to: temperature, state of charge (State of Charge, SOC), voltage, and current. Further, the BMS may determine whether a battery heating condition 1 is satisfied based on the temperature and/or SOC of the battery; if the battery heating condition 1 is satisfied, the BMS may send a heating request to the vehicle controller, where the battery heating condition 1 being satisfied may include but is not limited to: the temperature of the battery being below a preset temperature lower limit, and/or the SOC being within a preset SOC range. Further, upon receiving the heating request sent by the BMS, the vehicle controller may detect the state of the motor; if it is detected that the motor is in a non-operating state, the vehicle controller may send the heating enable signal to the controller. It should be understood that the heating enable signal involved in the embodiments of this application may be sent by the vehicle controller through various communication protocols or signaling, and this is not limited in the embodiments of this application.

Of course, the heating enable signal may alternatively be sent by the vehicle controller to the controller in other circumstances. For example, the heating enable signal may alternatively be sent by the vehicle controller to the controller upon detecting that a preset time is reached or an ambient temperature is below a preset ambient temperature and that the motor is in a non-operating state.

It should be noted that if it is detected that the motor is in an operating state (or referred to as a driving state), the vehicle controller may send a control drive signal to the controller, so that the controller sends a periodic drive signal to control the switching states of the switching transistors in each of the inverter bridge arms, thereby achieving inverter control of the battery current.

In another possible implementation, if the controller is a domain controller, the controller may generate the heating enable signal upon detecting that a battery heating condition 2 is satisfied and the motor is in a non-operating state, where the battery heating condition 2 may include but is not limited to: the temperature of the battery being below a preset temperature lower limit, the SOC being within a preset SOC range, a preset time being reached, and/or an ambient temperature being below a preset ambient temperature.

Of course, the controller may also acquire the heating enable signal in other ways, and this is not limited in the embodiments of this application.

Step S202: Control switching states of switching transistors in the switch circuit in response to the heating enable signal, so as to generate a half-wave current in the motor to heat the battery.

In this step, the controller may, in response to the heating enable signal acquired in step S201 above, control the switching states of the switching transistors in the switch circuit to adjust the current path between the battery and the motor, so as to generate a half-wave current in the motor to heat the battery, where a current waveform of each phase stator winding is a half-wave current waveform (that is, maintaining the current direction in each phase stator winding unchanged), thereby increasing the current harmonics in the stator windings of the motor and dispersing the vibration noise energy during the motor-based battery heating process.

In one possible implementation, if the motor includes a three-phase stator winding (excluding a neutral line), the controller may, in response to the heating enable signal, control the switching states of the switching transistors in the three inverter bridge arms to generate a half-wave current in the motor to heat the battery.

In another possible implementation, if the motor includes a three-phase stator winding and a neutral line, the controller may, in response to the heating enable signal, control the switching states of the switching transistors in the three inverter bridge arms and the neutral bridge arm to generate a half-wave current in the motor to heat the battery.

In the above battery heating method, a heating enable signal configured to indicate that the motor is to heat the battery based on the heating circuit is acquired, and the switching states of the switching transistors in the switch circuit are controlled in response to the heating enable signal, to generate a half-wave current in the motor to heat the battery, where a current waveform of each phase stator winding during the motor-based battery heating process is a half-wave current waveform, thereby increasing current harmonics in the stator windings of the motor and dispersing vibration noise energy during the motor-based battery heating process. Thus, as compared to conventional technologies, the vibration noise during the motor-based battery heating process in the embodiments of this application is reduced, thereby alleviating the vibration noise issue during the motor-based battery heating process.

In some embodiments, FIG. 3 is a schematic diagram of a current waveform of a stator winding according to some other embodiments of this application. Based on the above embodiments, the embodiments of this application introduce content related to the half-wave current.

As an example, as shown in FIG. 3, a cycle of the half-wave current of the stator winding in the embodiments of this application may include: a stator winding energy storage stage S1 in which the current gradually increases, a stator winding freewheeling stage S2 in which the current remains constant, a stator winding discharge stage S3 in which the current gradually decreases, and a stator winding current dead-time stage S4 in which the current is zero. It should be understood that the half-wave current in each phase stator winding may vary periodically, each cycle including: the stator winding energy storage stage S1 in which the current gradually increases, the stator winding freewheeling stage S2 in which the current remains constant, the stator winding discharge stage S3 in which the current gradually decreases, and the stator winding current dead-time stage S4 in which the current is zero.

As an example, when the half-wave current of the stator winding is in the stator winding energy storage stage S1 in which the current gradually increases, the battery is in a discharge state, and the stator windings of the motor are in an excitation energy storage state (or referred to as the motor being in the stator winding energy storage stage); when the half-wave current of the stator winding is in the stator winding freewheeling stage S2 in which the current remains constant, the stator windings of the motor are in an internal freewheeling state (or referred to as the motor being in the stator winding freewheeling stage); when the half-wave current of the stator winding is in the stator winding discharge stage S3 in which the current gradually decreases, the stator windings of the motor are in an energy release discharge state (or referred to as the motor being in the stator winding discharge stage), and the battery is in a charging state; and when the half-wave current of the stator winding is in the stator winding current dead-time stage S4 in which the current is zero, the stator windings of the motor are in a dead-time state (or referred to as the motor being in the stator winding current dead-time stage).

It should be understood that since the capacitor in the heating circuit stores some energy during the three stages prior to the stator winding current dead-time stage, when the half-wave current of the stator winding is in the stator winding current dead-time stage in which the current is zero, the capacitor in the heating circuit can charge the battery, which not only ensures the heating efficiency of the battery but also improves energy utilization efficiency during the battery heating process.

Thus, as shown in FIG. 3, the current direction in each phase stator winding during the motor-based battery heating process in the embodiments of this application remains constant, that is, the current waveform of each phase stator winding is a half-wave current waveform, which can increase the current harmonics in the stator windings of the motor, thereby dispersing the vibration noise energy during the motor-based battery heating process.

In addition, in the embodiments of this application, the controller can control a dead-time duration of the motor in the stator winding current dead-time stage (or the dead-time duration when the current of the stator winding is in the stator winding current dead-time stage S4 in which the current is zero), thereby reducing an effective value of the current of the stator winding while maintaining an effective value of the battery current unchanged, thus further reducing motor noise.

In some embodiments, based on the above embodiments, the controller may further control the switching transistors in the switch circuit to be in the off state upon detecting that a stop heating condition is satisfied, so that the motor stops heating the battery, which is beneficial to protecting the safety of the battery.

In one possible implementation, if the controller is a motor controller, the controller may control the switching transistors in the switch circuit to be in the off state upon receiving a battery temperature abnormality signal or a stop heating enable signal sent by the vehicle controller, so that the motor stops heating the battery, which is beneficial to protecting the safety of the battery.

As an example, the BMS may determine in real time or at preset intervals whether the temperature of the battery is abnormal; if it is determined that the temperature of the battery is abnormal, the BMS may send a battery temperature abnormality signal to the vehicle controller, so that the vehicle controller forwards the battery temperature abnormality signal to the controller, enabling the controller to control the switching transistors in the switch circuit to be in the off state, thereby stopping the heating of the battery.

As another example, the BMS may determine in real time or at preset intervals whether the temperature of the battery reaches a preset temperature; if it is determined that the temperature of the battery reaches the preset temperature, the BMS may send a stop heating enable signal to the vehicle controller, so that the vehicle controller forwards the stop heating enable signal to the controller, enabling the controller to control the switching transistors in the switch circuit to be in the off state, thereby stopping the heating of the battery.

In another possible implementation, if the controller is a domain controller, the controller may control the switching transistors in the switch circuit to be in the off state upon detecting that the temperature of the battery is abnormal or the temperature of the battery reaches a preset temperature, so that the motor stops heating the battery, which is beneficial to protecting the safety of the battery.

It should be understood that if the controller does not detect that a stop heating condition is satisfied during the execution of step S202 above, it continues to execute step S202 above.

Based on the above embodiments, a case where the motor includes a three-phase stator winding (excluding a neutral line) and a case where the motor includes a three-phase stator winding and a neutral line will be described separately in the following embodiments of this application.

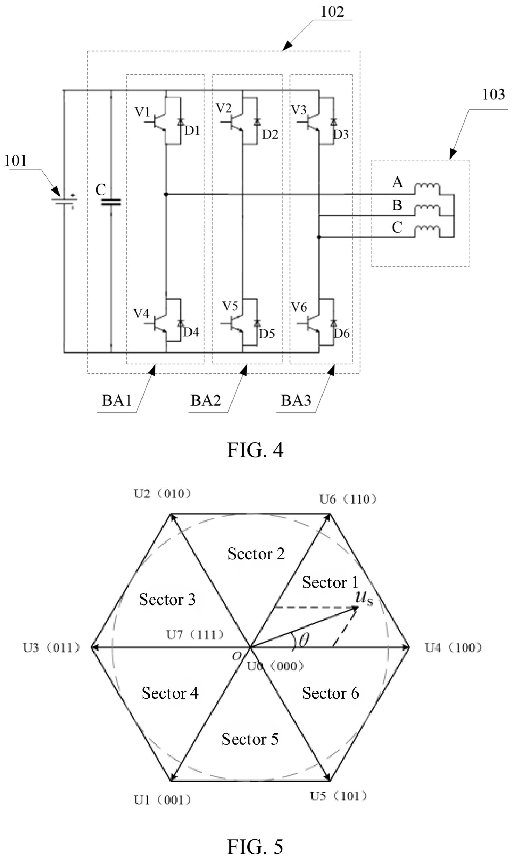

In some embodiments, the embodiments of this application introduce the case where the motor includes a three-phase stator winding (excluding a neutral line). For ease of understanding, the embodiments of this application first introduce a structure of a battery heating circuit. FIG. 4 is a schematic structural diagram of a battery heating circuit according to some embodiments of this application. As shown in FIG. 4, the battery heating circuit of the embodiments of this application may include: a heating circuit and a controller (not shown in FIG. 4), where the heating circuit may include: a motor 103, a battery 101, and a switch circuit 102 respectively connected to the motor 103 and the battery 101.

As an example, the switch circuit 102 may include three inverter bridge arms (for example, BA1, BA2, and BA3 in FIG. 4) disposed between the motor 103 and the battery 101 and respectively connected to the three-phase stator winding (for example, A, B, and C in FIG. 4) of the motor 103 and a capacitor C connected in parallel with the three inverter bridge arms. Each inverter bridge arm may include: an upper bridge arm switching transistor and a lower bridge arm switching transistor. For example, as shown in FIG. 4, the inverter bridge arm BA1 includes an upper bridge arm switching transistor V1 and a lower bridge arm switching transistor V4, the inverter bridge arm BA2 includes an upper bridge arm switching transistor V2 and a lower bridge arm switching transistor V5, and the inverter bridge arm BA3 includes an upper bridge arm switching transistor V3 and a lower bridge arm switching transistor V6.

It should be noted that any switching transistor involved in the embodiments of this application may be a switching transistor including a body diode. For example, as shown in FIG. 4, diode D1 is the body diode of switching transistor V1, diode D2 is the body diode of switching transistor V2, ..., and diode D6 is the body diode of switching transistor V6.

It should be understood that a control terminal of each of the switching transistors in the embodiments of this application is connected to the controller (not shown in FIG. 4), so that the controller can send a control signal to the corresponding switching transistor through the control terminal (for example, gate) of any switching transistor to control the switching state of the corresponding switching transistor. As an example, the control signal sent by the controller to any switching transistor may include but is not limited to a pulse width modulation (Pulse Width Modulation, PWM) signal.

The switching states of the switching transistors in the three inverter bridge arms during different stages of the motor are described in the following embodiments of this application.
(1) When the motor is in the stator winding energy storage stage, an upper bridge arm switching transistor in a target inverter bridge arm among the three inverter bridge arms is in the on state, and lower bridge arm switching transistors in other inverter bridge arms excluding the target inverter bridge arm among the three inverter bridge arms are in the on state, so as to enable the battery to discharge to the motor. As a result, the stator windings of the motor enter an excitation energy storage state (that is, a stator inductance of the motor is in an energy accumulation rising state), thereby causing the current in each of the phase stator windings of the motor to be in the stator winding energy storage stage in which the current gradually increases.

In the embodiments of this application, the controller may predetermine the target inverter bridge arm among the three inverter bridge arms that needs to have its upper bridge arm switching transistor turned on, based on a rotor position of the motor, so that the upper bridge arm switching transistor in the target inverter bridge arm can subsequently be controlled to be in the on state.

As an example, the controller may acquire space vector data, where the space vector data may include a plurality of space sectors, each space sector corresponding to different switch state information.

For ease of understanding, the embodiments of this application introduce the drawing form corresponding to the space vector data. FIG. 5 is a schematic diagram of a space vector diagram according to an embodiment of this application. As shown in FIG. 5, the space vector data in the embodiments of this application may include a plurality of space sectors (for example, space sector 1 to space sector 6 in FIG. 5), where each space sector corresponds to different switch state information, for example, space sector 1 corresponds to switch state information U4 and switch state information U6, space sector 2 corresponds to switch state information U2 and switch state information U6, ..., and space sector 6 corresponds to switch state information U4 and switch state information U5. It should be understood that, in different switch state information, data from left to right respectively represents the switching state of the upper bridge arm switching transistor connected to the corresponding phase stator winding, where "0" represents the off state, and "1" represents the on state.

Further, the controller may determine a first space sector in which a rotor of the motor is located and a second space sector symmetrical to the first space sector.

In the embodiments of this application, the controller may obtain the rotor position of the motor, thereby determining the first space sector in which the rotor is located in corresponding space vector data and a second space sector symmetrical to the first space sector based on the rotor position. For example, assuming that the first space sector in which the rotor of the motor is located is space sector 1, the second space sector symmetrical to the first space sector is space sector 4.

Further, the controller may determine the target inverter bridge arm based on switch state information corresponding to the first space sector and the second space sector.

In the embodiments of this application, the controller may select any switch state information from the switch state information corresponding to the first space sector and the second space sector and determine the target inverter bridge arm based on data in the selected switch state information, so that an included angle between a magnetic field generated by a stator magnetic field during inductance excitation and a magnetic field of the rotor is as small as possible, thereby minimizing torque fluctuations generated at the start of heating.

For example, assuming that the first space sector in which the rotor of the motor is located is space sector 1, the controller selects switch state information U4 (100) from switch state information U4 and U6 corresponding to space sector 1 and switch state information U1 and U3 corresponding to space sector 4, then the controller may determine the inverter bridge arm BA1 connected to the A-phase stator winding among the three inverter bridge arms as the target inverter bridge arm based on data in the switch state information U4 (100).

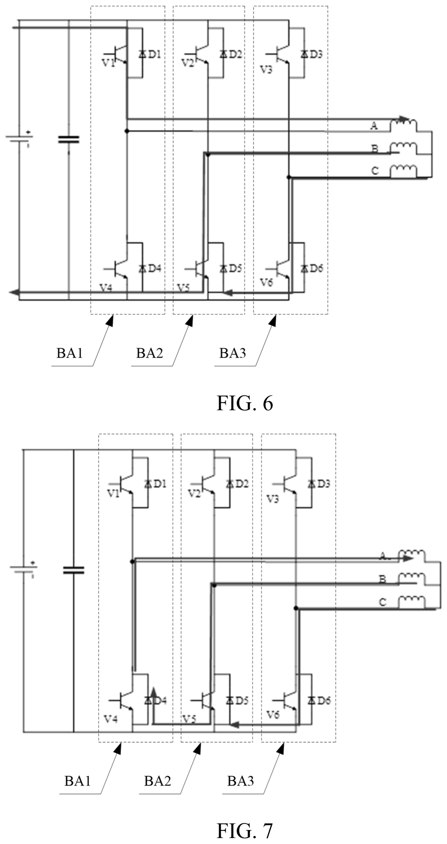

FIG. 6 is a first schematic diagram of current flow when a motor is in a stator winding energy storage stage according to an embodiment of this application. As shown in FIG. 6, assuming that the target inverter bridge arm is the inverter bridge arm BA1 connected to the A-phase stator winding among the three inverter bridge arms, and the other inverter bridge arms include the inverter bridge arm BA2 connected to the B-phase stator winding and the inverter bridge arm BA3 connected to the C-phase stator winding, when the motor is in the stator winding energy storage stage, the upper bridge arm switching transistor V1 in the inverter bridge arm BA1 is in the on state, and the lower bridge arm switching transistor V5 in the inverter bridge arm BA2 connected to the B-phase stator winding and the lower bridge arm switching transistor V6 in the inverter bridge arm BA3 connected to the C-phase stator winding are both in the on state. As a result, the current across the terminals of the battery flows from the positive electrode of the battery → switching transistor V1 → A-phase stator winding → B-phase stator winding and C-phase stator winding → switching transistor V5 and switching transistor V6 → negative electrode of the battery.

(2) When the motor is in the stator winding freewheeling stage, the upper bridge arm switching transistor in the target inverter bridge arm switches to the off state, and the lower bridge arm switching transistors in the other inverter bridge arms remain in the on state, so that the stator windings of the motor are in an internal freewheeling state (that is, there is no energy interaction between the battery and the stator inductance of the motor), causing the current in each of the phase stator windings of the motor to be in the stator winding freewheeling stage in which the current remains constant.

FIG. 7 is a first schematic diagram of current flow when a motor is in a stator winding freewheeling stage according to an embodiment of this application. As shown in FIG. 7, assuming that the target inverter bridge arm is the inverter bridge arm BA1 connected to the A-phase stator winding among the three inverter bridge arms, and the other inverter bridge arms include the inverter bridge arm BA2 connected to the B-phase stator winding and the inverter bridge arm BA3 connected to the C-phase stator winding, when the motor is in the stator winding freewheeling stage, the upper bridge arm switching transistor V1 in the inverter bridge arm BA1 connected to the A-phase stator winding switches to the off state, and the lower bridge arm switching transistor V5 in the inverter bridge arm BA2 connected to the B-phase stator winding and the lower bridge arm switching transistor V6 in the inverter bridge arm BA3 connected to the C-phase stator winding both remain in the on state, performing internal freewheeling using the body diode D4 of the lower bridge arm switching transistor in the inverter bridge arm BA1 connected to the A-phase stator winding, where the stator winding current direction in the motor may be: B-phase stator winding and C-phase stator winding → switching transistor V5 and switching transistor V6 → body diode D4 → A-phase stator winding → B-phase stator winding and C-phase stator winding.

(3) When the motor is in the stator winding discharge stage, the lower bridge arm switching transistors in the other inverter bridge arms switch to the off state, so as to enable the motor to discharge to the battery. As a result, the stator windings of the motor enter an energy release discharge state (that is, the energy stored in the stator windings of the motor is released to the battery), causing the current in each of the phase stator windings of the motor to be in the stator winding discharge stage in which the current gradually decreases.

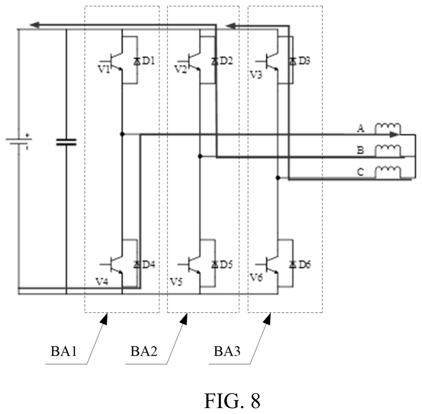

FIG. 8 is a first schematic diagram of current flow when a motor is in a stator winding discharge stage according to an embodiment of this application. As shown in FIG. 8, assuming that the target inverter bridge arm is the inverter bridge arm BA1 connected to the A-phase stator winding among the three inverter bridge arms, and the other inverter bridge arms include the inverter bridge arm BA2 connected to the B-phase stator winding and the inverter bridge arm BA3 connected to the C-phase stator winding, when the motor is in the stator winding discharge stage, the lower bridge arm switching transistor V5 in the inverter bridge arm BA2 connected to the B-phase stator winding and the lower bridge arm switching transistor V6 in the inverter bridge arm BA3 connected to the C-phase stator winding switch to the off state, so that the energy stored in the stator windings of the motor is released to the battery, where the current across the terminals of the battery flows from the negative electrode of the battery → body diode D4 → A-phase stator winding → B-phase stator winding and C-phase stator winding → body diode D2 and body diode D3 → positive electrode of the battery.

(4) When the motor is in a stator winding current dead-time stage, the lower bridge arm switching transistors in the other inverter bridge arms remain in the off state. Since the energy stored in the stator windings of the motor has been fully released, the current in each of the phase stator windings is in the stator winding current dead-time stage in which the current is zero. During this stage, energy oscillation occurs between the capacitor in the heating circuit performs and the battery to improve energy utilization efficiency during the battery heating process.

In the embodiments of this application, during different stages of the motor, the switching states of the switching transistors in the three inverter bridge arms vary, so that the current waveform of each phase stator winding during the motor-based battery heating process is a half-wave current waveform, thereby increasing the current harmonics in the stator windings of the motor, dispersing the vibration noise energy during the motor-based battery heating process, and thus alleviating the vibration noise issue during the motor-based battery heating process.

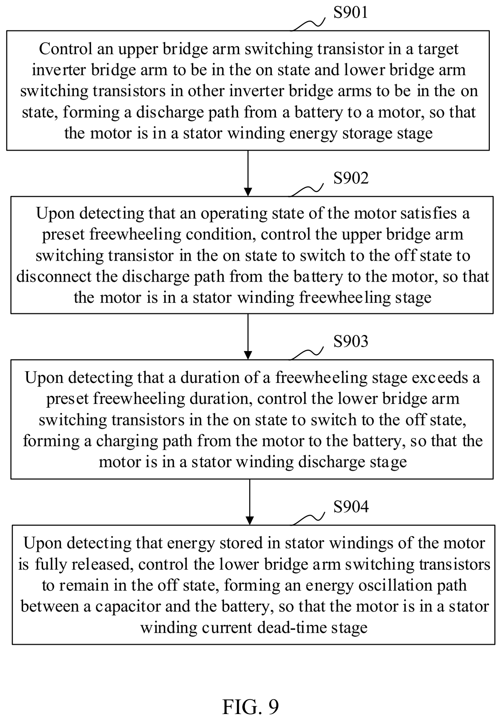

In some embodiments, FIG. 9 is a flowchart of a battery heating method according to some other embodiments of this application. Based on the above embodiments, the embodiments of this application introduce a possible implementation of "controlling switching states of switching transistors in the switch circuit in response to the heating enable signal" in step S202 above when the motor includes a three-phase stator winding (excluding a neutral line). As shown in FIG. 9, the method of the embodiments of this application may include the following steps.

Step S901: Control an upper bridge arm switching transistor in a target inverter bridge arm to be in the on state and lower bridge arm switching transistors in other inverter bridge arms to be in the on state, forming a discharge path from a battery to a motor, so that the motor is in a stator winding energy storage stage.

In this step, the controller may control the upper bridge arm switching transistor in the target inverter bridge arm among three inverter bridge arms to be in the on state and the lower bridge arm switching transistors in the other inverter bridge arms excluding the target inverter bridge arm among the three inverter bridge arms to be in the on state, forming a discharge path from the battery to the motor (for example, as shown in FIG. 6, from the positive electrode of the battery → switching transistor V1 → A-phase stator winding → B-phase stator winding and C-phase stator winding → switching transistor V5 and switching transistor V6 → negative electrode of the battery), so as to enable the battery to discharge to the motor. As a result, the stator windings of the motor enter an excitation energy storage state (or referred to as the motor being in the stator winding energy storage stage), thereby causing the current in each of the phase stator windings of the motor to be in the stator winding energy storage stage in which the current gradually increases.

Step S902: Upon detecting that an operating state of the motor satisfies a preset freewheeling condition, control the upper bridge arm switching transistor in the on state to switch to the off state to disconnect the discharge path from the battery to the motor, so that the motor is in a stator winding freewheeling stage.

In this step, upon detecting that the operating state of the motor satisfies the preset freewheeling condition, the controller may control the upper bridge arm switching transistor in the on state in step S901 above to switch to the off state to disconnect the discharge path from the battery to the motor, so that the stator windings of the motor are in an internal freewheeling state (that is, there is no energy interaction between the battery and the stator inductance of the motor), causing the current in each of the phase stator windings of the motor to be in the stator winding freewheeling stage in which the current remains constant. For example, as shown in FIG. 7, after disconnecting the discharge path from the battery to the motor, the stator winding current direction in the motor may be: B-phase stator winding and C-phase stator winding → switching transistor V5 and switching transistor V6 → body diode D4 → A-phase stator winding → B-phase stator winding and C-phase stator winding, indicating that the stator windings of the motor are in an internal freewheeling state (or referred to as the motor being in the stator winding freewheeling stage).

As an example, the controller may determine that the operating state of the motor satisfies the preset freewheeling condition upon detecting that a duration of the excitation energy storage state exceeds a preset energy storage duration or the current of the stator winding reaches a preset current; of course, the controller may alternatively determine whether the operating state of the motor satisfies the preset freewheeling condition in other ways, and this is not limited in the embodiments of this application.

Step S903: Upon detecting that a duration of a freewheeling stage exceeds a preset freewheeling duration, control the lower bridge arm switching transistors in the on state to switch to the off state, forming a charging path from the motor to the battery, so that the motor is in a stator winding discharge stage.

In this step, upon detecting that the duration of the freewheeling stage exceeds the preset freewheeling duration, the controller may control the lower bridge arm switching transistors in the on state in steps S901 and S902 above to switch to the off state, forming a charging path from the motor to the battery (for example, as shown in FIG. 8, from the negative electrode of the battery → body diode D4 → A-phase stator winding → B-phase stator winding and C-phase stator winding → body diode D2 and body diode D3 → positive electrode of the battery), so as to enable the motor to discharge to the battery. As a result, the stator windings of the motor enter an energy release discharge state (that is, the energy stored in the stator windings of the motor is released to the battery), causing the current in each of the phase stator windings of the motor to be in the stator winding discharge stage in which the current gradually decreases.

Step S904: Upon detecting that energy stored in the stator windings of the motor is fully released, control the lower bridge arm switching transistors to remain in the off state, forming an energy oscillation path between a capacitor and the battery, so that the motor is in a stator winding current dead-time stage.

In this step, upon detecting that the energy stored in the stator windings of the motor is fully released, the controller may control the lower bridge arm switching transistors switched in step S903 above to remain in the off state, forming an energy oscillation path between the capacitor and the battery, so as to enable the capacitor to discharge to the battery. As a result, the motor enters the stator winding current dead-time stage, causing the current in each of the phase stator windings of the motor to be in the stator winding current dead-time stage in which the current is zero.

It should be understood that steps S901 to S904 above may be cyclically repeated steps until the controller detects that a stop heating condition is satisfied.

In the embodiments of this application, with the switching states of the upper bridge arm switching transistor in the target inverter bridge arm and the lower bridge arm switching transistors in the other inverter bridge arms among the three inverter bridge arms being controlled, the motor heats the battery while maintaining the current direction in each phase stator winding unchanged, thereby increasing the current harmonics in the stator windings of the motor and dispersing the vibration noise energy during the motor-based battery heating process. In addition, the controller can further reduce motor noise by controlling the dead-time duration of the motor in the stator winding current dead-time state, reducing the effective value of the current of the stator winding without changing the effective value of the battery current waveform. Thus, as compared to conventional technologies, motor noise can be effectively reduced in the embodiments of this application while ensuring the original battery heating effect remains unchanged.

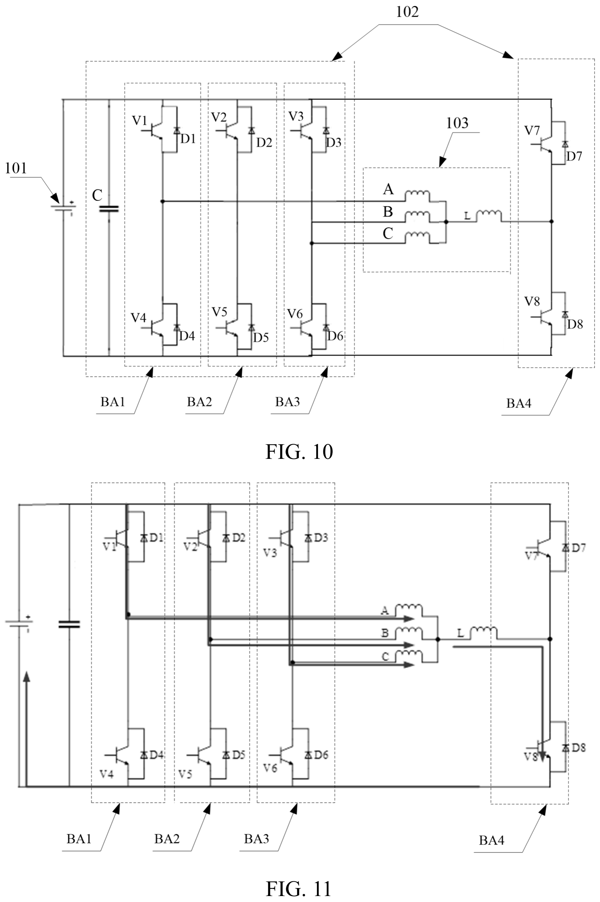

In some embodiments, the embodiments of this application introduce the case where the motor includes a three-phase stator winding and a neutral line. For ease of understanding, the embodiments of this application first introduce the structure of a battery heating circuit. FIG. 10 is a schematic structural diagram of a battery heating circuit according to some other embodiments of this application. As shown in FIG. 10, the battery heating circuit of the embodiments of this application may include: a heating circuit and a controller (not shown in FIG. 10), where the heating circuit may include: a motor 103, a battery 101, and a switch circuit 102 respectively connected to the motor 103 and the battery 101.

As an example, the switch circuit 102 may include a neutral bridge arm BA4 disposed between a neutral line L of the motor 103 and the battery 101, three inverter bridge arms (for example, BA1, BA2, and BA3 in FIG. 10) disposed between the motor 103 and the battery 101 and respectively connected to the three-phase stator winding (for example, A, B, and C in FIG. 10) of the motor 103, and a capacitor C connected in parallel with the three inverter bridge arms. Each inverter bridge arm may include: an upper bridge arm switching transistor and a lower bridge arm switching transistor, and the neutral bridge arm may include an upper bridge arm switching transistor and a lower bridge arm switching transistor. For example, as shown in FIG. 10, the neutral bridge arm BA4 may include an upper bridge arm switching transistor V and a lower bridge arm switching transistor V8.

It should be noted that any switching transistor in the embodiments of this application may be a switching transistor including a body diode. For example, as shown in FIG. 10, diode D7 is the body diode of switching transistor V7, and diode D8 is the body diode of switching transistor V8.

It should be understood that a control terminal (for example, gate) of each switching transistor in the embodiments of this application is connected to the controller (not shown in FIG. 10), so that the controller can send a control signal to a corresponding switching transistor through the control terminal of any switching transistor to control an switching state of the corresponding switching transistor.

The switching states of the switching transistors in the three inverter bridge arms and the neutral bridge arm during different stages of the motor are described in the following embodiments of this application.

In one possible implementation: (1) when the motor is in a stator winding energy storage stage, the upper bridge arm switching transistor in each of the inverter bridge arms is in the on state, and the lower bridge arm switching transistor in the neutral bridge arm is in the on state; (2) when the motor is in a stator winding freewheeling stage, the upper bridge arm switching transistor in each of the inverter bridge arms switches to the off state, and the lower bridge arm switching transistor in the neutral bridge arm remains in the on state; (3) when the motor is in a stator winding discharge stage, the lower bridge arm switching transistor in the neutral bridge arm switches to the off state; and (4) when the motor is in a stator winding current dead-time stage, the lower bridge arm switching transistor in the neutral bridge arm remains in the off state.

Due to the specificity of the motor structure with a neutral line, the three-phase stator winding of the motor can carry in-phase current. In this implementation, when the motor is in the stator winding energy storage stage, the upper bridge arm switching transistor in each of the inverter bridge arms is in the on state, and the lower bridge arm switching transistor in the neutral bridge arm is in the on state, so as to enable the battery to discharge to the motor. As a result, the stator windings of the motor enter an excitation energy storage state (that is, a stator inductance of the motor is in an energy accumulation rising state), thereby causing the current in each of the phase stator windings of the motor to be in the stator winding energy storage stage in which the current gradually increases.

FIG. 11 is a second schematic diagram of current flow when a motor is in a stator winding energy storage stage according to an embodiment of this application. As shown in FIG. 11, when the motor is in the stator winding energy storage stage, the upper bridge arm switching transistor V1 in the inverter bridge arm BA1 connected to the A-phase stator winding, the upper bridge arm switching transistor V2 in the inverter bridge arm BA2 connected to the B-phase stator winding, and the upper bridge arm switching transistor V3 in the inverter bridge arm BA3 connected to the C-phase stator winding are in the on state, and the lower bridge arm switching transistor V8 in the neutral bridge arm BA4 is in the on state, causing the current across the terminals of the battery to flow from the positive electrode of the battery → switching transistor V1, switching transistor V2, and switching transistor V3 → A-phase stator winding, B-phase stator winding, and C-phase stator winding → neutral line L → switching transistor V8 → negative electrode of the battery.

In this implementation, when the motor is in the stator winding freewheeling stage, the upper bridge arm switching transistor in each of the inverter bridge arms switches to the off state, and the lower bridge arm switching transistor in the neutral bridge arm remains in the on state, so that the stator windings of the motor are in an internal freewheeling state (that is, there is no energy interaction between the battery and the stator inductance of the motor), causing the current in each of the phase stator windings of the motor to be in the stator winding freewheeling stage in which the current remains constant.

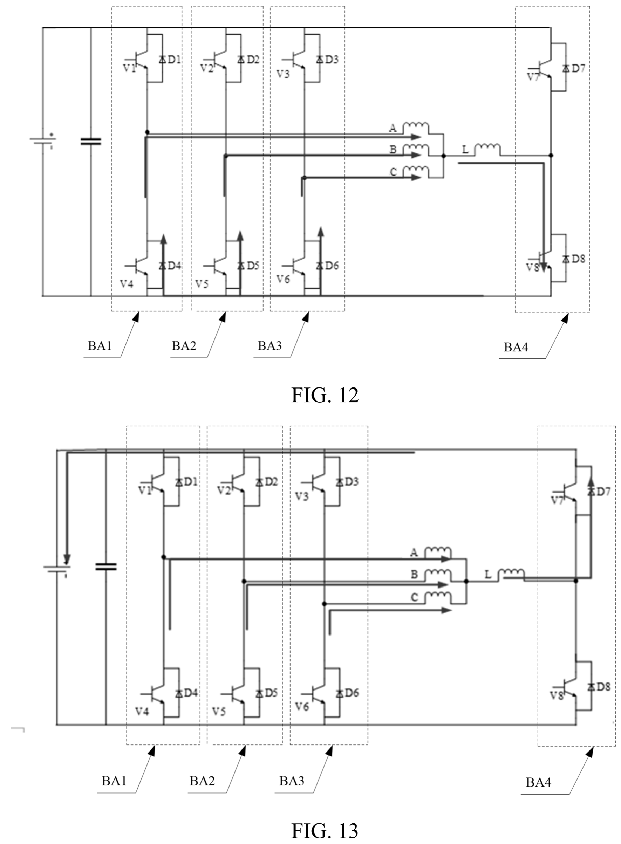

FIG. 12 is a second schematic diagram of current flow when a motor is in a stator winding freewheeling stage according to an embodiment of this application. As shown in FIG. 12, when the motor is in the stator winding freewheeling stage, the upper bridge arm switching transistor V1 in the inverter bridge arm BA1 connected to the A-phase stator winding, the upper bridge arm switching transistor V2 in the inverter bridge arm BA2 connected to the B-phase stator winding, and the upper bridge arm switching transistor V3 in the inverter bridge arm BA3 connected to the C-phase stator winding switch to the off state, and the lower bridge arm switching transistor V8 in the neutral bridge arm BA4 remains in the on state, performing internal freewheeling using the body diode D4 of the lower bridge arm switching transistor in the inverter bridge arm BA1 connected to the A-phase stator winding, the body diode D5 of the lower bridge arm switching transistor in the inverter bridge arm BA2 connected to the B-phase stator winding, and the body diode D6 of the lower bridge arm switching transistor in the inverter bridge arm BA3 connected to the C-phase stator winding, where the stator winding current direction in the motor may be: A-phase stator winding, B-phase stator winding, and C-phase stator winding → neutral line L → switching transistor V8 → body diode D4, body diode D5, and body diode D6 → A-phase stator winding, B-phase stator winding, and C-phase stator winding.

In this implementation, when the motor is in the stator winding discharge stage, the lower bridge arm switching transistor in the neutral bridge arm switches to the off state, so as to enable the motor to discharge to the battery. As a result, the stator windings of the motor enter an energy release discharge state (that is, the energy stored in the stator windings of the motor is released to the battery), causing the current in each of the phase stator windings of the motor to be in the stator winding discharge stage in which the current gradually decreases.

FIG. 13 is a second schematic diagram of current flow when a motor is in a stator winding discharge stage according to an embodiment of this application. As shown in FIG. 13, when the motor is in the stator winding discharge stage, the lower bridge arm switching transistor V8 in the neutral bridge arm BA4 switches to the off state, so that the energy stored in the stator windings of the motor is released to the battery, where the current across the terminals of the battery flows from the negative electrode of the battery → body diode D4, body diode D5, and body diode D6 → A-phase stator winding, B-phase stator winding, and C-phase stator winding → neutral line L → body diode D7 → positive electrode of the battery.

In this implementation, when the motor is in the stator winding current dead-time stage, the lower bridge arm switching transistor in the neutral bridge arm remains in the off state. Since the energy stored in the stator windings of the motor has been fully released, the current in each of the phase stator windings is in the stator winding current dead-time stage in which the current is zero. During this stage, energy oscillation occurs between the capacitor in the heating circuit and the battery to improve energy utilization efficiency during the battery heating process.

In another possible implementation: (1) When the motor is in the stator winding energy storage stage, the lower bridge arm switching transistor in each of the inverter bridge arms is in the on state, and the upper bridge arm switching transistor in the neutral bridge arm is in the on state. (2) When the motor is in the stator winding freewheeling stage, the lower bridge arm switching transistor in each of the inverter bridge arms switches to the off state, and the upper bridge arm switching transistor in the neutral bridge arm remains in the on state. (3) When the motor is in the stator winding discharge stage, the upper bridge arm switching transistor in the neutral bridge arm switches to the off state. (4) When the motor is in the stator winding current dead-time stage, the upper bridge arm switching transistor in the neutral bridge arm remains in the off state.

In this implementation, when the motor is in the stator winding energy storage stage, the lower bridge arm switching transistor in each of the inverter bridge arms is in the on state, and the upper bridge arm switching transistor in the neutral bridge arm is in the on state, so as to enable the battery to discharge to the motor. As a result, the stator windings of the motor enter an excitation energy storage state (that is, a stator inductance of the motor is in an energy accumulation rising state), thereby causing the current in each of the phase stator windings of the motor to be in the stator winding energy storage stage in which the current gradually increases.

For example, referring to FIG. 11, when the motor is in the stator winding energy storage stage, the lower bridge arm switching transistor V4 in the inverter bridge arm BA1 connected to the A-phase stator winding, the lower bridge arm switching transistor V5 in the inverter bridge arm BA2 connected to the B-phase stator winding, and the lower bridge arm switching transistor V6 in the inverter bridge arm BA3 connected to the C-phase stator winding are in the on state, and the upper bridge arm switching transistor V7 in the neutral bridge arm BA4 is in the on state, causing the current across the terminals of the battery to flow from the positive electrode of the battery → switching transistor V7 → neutral line L → A-phase stator winding, B-phase stator winding, and C-phase stator winding → switching transistor V4, switching transistor V5, and switching transistor V6 → negative electrode of the battery.

In this implementation, when the motor is in the stator winding freewheeling stage, the lower bridge arm switching transistor in each of the inverter bridge arms switches to the off state, and the upper bridge arm switching transistor in the neutral bridge arm remains in the on state, so that the stator windings of the motor are in an internal freewheeling state (that is, there is no energy interaction between the battery and the stator inductance of the motor), causing the current in each of the phase stator windings of the motor to be in the stator winding freewheeling stage in which the current remains constant.

For example, referring to FIG. 12, when the motor is in the stator winding freewheeling stage, the lower bridge arm switching transistor V4 in the inverter bridge arm BA1 connected to the A-phase stator winding, the lower bridge arm switching transistor V5 in the inverter bridge arm BA2 connected to the B-phase stator winding, and the lower bridge arm switching transistor V6 in the inverter bridge arm BA3 connected to the C-phase stator winding switch to the off state, and the upper bridge arm switching transistor V7 in the neutral bridge arm BA4 remains in the on state, performing internal freewheeling using the body diode D1 of the upper bridge arm switching transistor in the inverter bridge arm BA1 connected to the A-phase stator winding, the body diode D2 of the upper bridge arm switching transistor in the inverter bridge arm BA2 connected to the B-phase stator winding, and the body diode D3 of the upper bridge arm switching transistor in the inverter bridge arm BA3 connected to the C-phase stator winding, where the stator winding current direction in the motor may be: switching transistor V7 → neutral line L → A-phase stator winding, B-phase stator winding, and C-phase stator winding → body diode D1, body diode D2, and body diode D3 → switching transistor V7.

In this implementation, when the motor is in the stator winding discharge stage, the upper bridge arm switching transistor in the neutral bridge arm switches to the off state, so as to enable the motor to discharge to the battery. As a result, the stator windings of the motor enter an energy release discharge state (that is, the energy stored in the stator windings of the motor is released to the battery), causing the current in each of the phase stator windings of the motor to be in the stator winding discharge stage in which the current gradually decreases.

For example, referring to FIG. 13, when the motor is in the stator winding discharge stage, the upper bridge arm switching transistor V7 in the neutral bridge arm BA4 switches to the off state, so that the energy stored in the stator windings of the motor is released to the battery, where the current across the terminals of the battery flows from the negative electrode of the battery → body diode D8 → neutral line L → A-phase stator winding, B-phase stator winding, and C-phase stator winding → body diode D1, body diode D2, and body diode D3 → positive electrode of the battery.

In this implementation, when the motor is in the stator winding current dead-time stage, the upper bridge arm switching transistor in the neutral bridge arm remains in the off state. Since the energy stored in the stator windings of the motor has been fully released, the current in each of the phase stator windings is in the stator winding current dead-time stage in which the current is zero. During this stage, energy oscillation occurs between the capacitor in the heating circuit and the battery to improve energy utilization efficiency during the battery heating process.

In the embodiments of this application, during different stages of the motor, the switching states of the switching transistors in the three inverter bridge arms and the neutral bridge arm vary, so that the current waveform of each phase stator winding during the motor-based battery heating process is a half-wave current waveform, thereby increasing the current harmonics in the stator windings of the motor, dispersing the vibration noise energy during the motor-based battery heating process, and thus alleviating the vibration noise issue during the motor-based battery heating process.

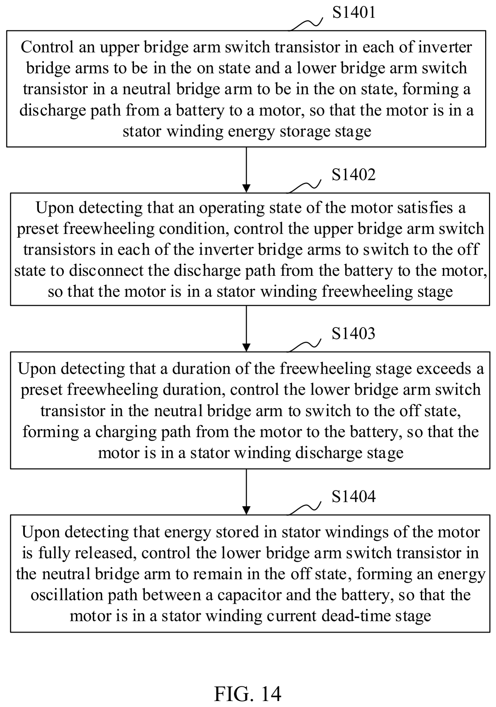

In some embodiments, FIG. 14 is a flowchart of a battery heating method according to some other embodiments of this application. Based on the above embodiments, the embodiments of this application introduce another possible implementation of "controlling switching states of switching transistors in the switch circuit in response to the heating enable signal" in step S202 above when the motor includes a three-phase stator winding and a neutral line. As shown in FIG. 14, the method of the embodiments of this application may include the following steps.

Step S1401: Control an upper bridge arm switching transistor in each of inverter bridge arms to be in the on state and a lower bridge arm switching transistor in a neutral bridge arm to be in the on state, forming a discharge path from a battery to a motor, so that the motor is in a stator winding energy storage stage.

In this step, the controller may control the upper bridge arm switching transistor in each of the inverter bridge arms to be in the on state and the lower bridge arm switching transistor in the neutral bridge arm to be in the on state, forming a discharge path from the battery to the motor (for example, as shown in FIG. 11, from the positive electrode of the battery → switching transistor V1, switching transistor V2, and switching transistor V3 → A-phase stator winding, B-phase stator winding, and C-phase stator winding → neutral line L → switching transistor V8 → negative electrode of the battery), so as to enable the battery to discharge to the motor. As a result, the stator windings of the motor enter an excitation energy storage state (or referred to as the motor being in the stator winding energy storage stage), thereby causing the current in each of the phase stator windings of the motor to be in the stator winding energy storage stage in which the current gradually increases.

Step S1402: Upon detecting that an operating state of the motor satisfies a preset freewheeling condition, control the upper bridge arm switching transistor in each of the inverter bridge arms to switch to the off state to disconnect the discharge path from the battery to the motor, so that the motor is in a stator winding freewheeling stage.

In this step, upon detecting that the operating state of the motor satisfies the preset freewheeling condition, the controller may control the upper bridge arm switching transistor in each of the inverter bridge arms to switch to the off state to disconnect the discharge path from the battery to the motor, so that the stator windings of the motor are in an internal freewheeling state (that is, there is no energy interaction between the battery and the stator inductance of the motor), causing the current in each of the phase stator windings of the motor to be in the stator winding freewheeling stage in which the current remains constant. For example, as shown in FIG. 12, after disconnecting the discharge path from the battery to the motor, the stator winding current direction in the motor may be: A-phase stator winding, B-phase stator winding, and C-phase stator winding → neutral line L → switching transistor V8 → body diode D4, body diode D5, and body diode D6 → A-phase stator winding, B-phase stator winding, and C-phase stator winding, indicating that the stator windings of the motor are in an internal freewheeling state (or referred to as the motor being in the stator winding freewheeling stage).

Step S1403: Upon detecting that a duration of the freewheeling stage exceeds a preset freewheeling duration, control the lower bridge arm switching transistor in the neutral bridge arm to switch to the off state, forming a charging path from the motor to the battery, so that the motor is in a stator winding discharge stage.

In this step, upon detecting that the duration of the freewheeling stage exceeds the preset freewheeling duration, the controller may control the lower bridge arm switching transistor in the neutral bridge arm to switch to the off state, forming a charging path from the motor to the battery (for example, as shown in FIG. 13, from the negative electrode of the battery → body diode D4, body diode D5, and body diode D6 → A-phase stator winding, B-phase stator winding, and C-phase stator winding → neutral line L → body diode D7 → positive electrode of the battery), so as to enable the motor to discharge to the battery. As a result, the stator windings of the motor enter an energy release discharge state (that is, the energy stored in the stator windings of the motor is released to the battery), causing the current in each of the phase stator windings of the motor to be in the stator winding discharge stage in which the current gradually decreases.

Step S1404: Upon detecting that energy stored in the stator windings of the motor is fully released, control the lower bridge arm switching transistor in the neutral bridge arm to remain in the off state, forming an energy oscillation path between a capacitor and the battery, so that the motor is in a stator winding current dead-time stage.

In this step, upon detecting that the energy stored in the stator windings of the motor is fully released, the controller may control the lower bridge arm switching transistor in the neutral bridge arm to remain in the off state, forming an energy oscillation path between the capacitor and the battery, so as to enable the capacitor to discharge to the battery. As a result, the motor enters the stator winding current dead-time stage, causing the current in each of the phase stator windings of the motor to be in the stator winding current dead-time stage in which the current is zero.

It should be understood that steps S1401 to S1404 above may be cyclically repeated steps until the controller detects that a stop heating condition is satisfied.

In the embodiments of this application, with the switching states of the upper bridge arm switching transistor in each of the inverter bridge arms and the lower bridge arm switching transistor in the neutral bridge arm being controlled, the motor heats the battery while maintaining the current direction in each phase stator winding unchanged, thereby increasing the current harmonics in the stator windings of the motor and dispersing the vibration noise energy during the motor-based battery heating process. In addition, the controller can further reduce motor noise by controlling the dead-time duration of the motor in the stator winding current dead-time state, reducing the effective value of the current of the stator winding without changing the effective value of the battery current waveform. Thus, as compared to conventional technologies, motor noise can be effectively reduced in the embodiments of this application while ensuring the original battery heating effect remains unchanged.

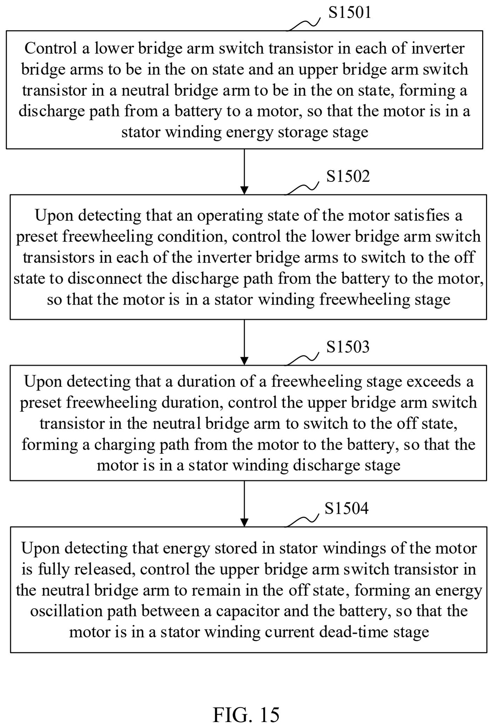

In some embodiments, FIG. 15 is a flowchart of a battery heating method according to some other embodiments of this application. Based on the above embodiments, the embodiments of this application introduce another possible implementation of "controlling switching states of switching transistors in the switch circuit in response to the heating enable signal" in step S202 above when the motor includes a three-phase stator winding and a neutral line. As shown in FIG. 15, the method of the embodiments of this application may include the following steps.

Step S1501: Control lower bridge arm switching transistor in each of the inverter bridge arms to be in the on state and an upper bridge arm switching transistor in a neutral bridge arm to be in the on state, forming a discharge path from a battery to a motor, so that the motor is in a stator winding energy storage stage.

In this step, the controller may control the lower bridge arm switching transistor in each of the inverter bridge arms to be in the on state and the upper bridge arm switching transistor in the neutral bridge arm to be in the on state, forming a discharge path from the battery to the motor (for example, referring to FIG. 11, from the positive electrode of the battery → switching transistor V7 → neutral line L → A-phase stator winding, B-phase stator winding, and C-phase stator winding → switching transistor V4, switching transistor V5, and switching transistor V6 → negative electrode of the battery), so as to enable the battery to discharge to the motor. As a result, the stator windings of the motor enter an excitation energy storage state (or referred to as the motor being in the stator winding energy storage stage), thereby causing the current in each of the phase stator windings of the motor to be in the stator winding energy storage stage in which the current gradually increases.

Step S1502: Upon detecting that an operating state of the motor satisfies a preset freewheeling condition, control the lower bridge arm switching transistor in each of the inverter bridge arms to switch to the off state to disconnect the discharge path from the battery to the motor, so that the motor is in a stator winding freewheeling stage.

In this step, upon detecting that the operating state of the motor satisfies the preset freewheeling condition, the controller may control the lower bridge arm switching transistor in each of the inverter bridge arms to switch to the off state to disconnect the discharge path from the battery to the motor, so that the stator windings of the motor are in an internal freewheeling state (that is, there is no energy interaction between the battery and the stator inductance of the motor), causing the current in each of the phase stator windings of the motor to be in the stator winding freewheeling stage in which the current remains constant. For example, referring to FIG. 12, after disconnecting the discharge path from the battery to the motor, the stator winding current direction in the motor may be: switching transistor V7 → neutral line L → A-phase stator winding, B-phase stator winding, and C-phase stator winding → body diode D1, body diode D2, and body diode D3 → switching transistor V7, indicating that the stator windings of the motor are in an internal freewheeling state (or referred to as the motor being in the stator winding freewheeling stage).

Step S1503: Upon detecting that a duration of the freewheeling stage exceeds a preset freewheeling duration, control the upper bridge arm switching transistor in the neutral bridge arm to switch to the off state, forming a charging path from the motor to the battery, so that the motor is in a stator winding discharge stage.

In this step, upon detecting that the duration of the freewheeling stage exceeds the preset freewheeling duration, the controller may control the upper bridge arm switching transistor in the neutral bridge arm to switch to the off state, forming a charging path from the motor to the battery (for example, referring to FIG. 13, from the negative electrode of the battery → body diode D8 → neutral line L → A-phase stator winding, B-phase stator winding, and C-phase stator winding → body diode D1, body diode D2, and body diode D3 → positive electrode of the battery), so as to enable the motor to discharge to the battery. As a result, the stator windings of the motor enter an energy release discharge state (that is, the energy stored in the stator windings of the motor is released to the battery), causing the current in each of the phase stator windings of the motor to be in the stator winding discharge stage in which the current gradually decreases.

Step S1504: Upon detecting that energy stored in the stator windings of the motor is fully released, control the upper bridge arm switching transistor in the neutral bridge arm to remain in the off state, forming an energy oscillation path between a capacitor and the battery, so that the motor is in a stator winding current dead-time stage.

In this step, upon detecting that the energy stored in the stator windings of the motor is fully released, the controller may control the upper bridge arm switching transistor in the neutral bridge arm to remain in the off state, forming an energy oscillation path between the capacitor and the battery, so as to enable the capacitor to discharge to the battery. As a result, the motor enters the stator winding current dead-time stage, causing the current in each of the phase stator windings of the motor to be in the stator winding current dead-time stage in which the current is zero.

It should be understood that steps S1501 to S 1504 above may be cyclically repeated steps until the controller detects that a stop heating condition is satisfied.

In the embodiments of this application, with the switching states of the lower bridge arm switching transistor in each of the inverter bridge arms and the upper bridge arm switching transistor in the neutral bridge arm being controlled, the motor heats the battery while maintaining the current direction in each phase stator winding unchanged, thereby increasing the current harmonics in the stator windings of the motor and dispersing the vibration noise energy during the motor-based battery heating process. In addition, the controller can further reduce motor noise by controlling the dead-time duration of the motor in the stator winding current dead-time state, reducing the effective value of the current of the stator winding without changing the effective value of the battery current waveform. Thus, as compared to conventional technologies, motor noise can be effectively reduced in the embodiments of this application while ensuring the original battery heating effect remains unchanged.

It should be understood that, although the steps in the flowcharts of the above embodiments are shown sequentially as indicated by arrows, these steps are not necessarily executed in the order indicated by the arrows. Unless explicitly stated herein, the execution of these steps is not strictly limited in order, and these steps may be executed in other orders. Moreover, at least some of the steps in the flowcharts of the above embodiments may include multiple sub-steps or multiple stages, which are not necessarily executed at the same time but may be executed at different times, and the execution order of these sub-steps or stages is not necessarily sequential but may be executed alternately or interchangeably with other steps or at least some of the sub-steps or stages of other steps.

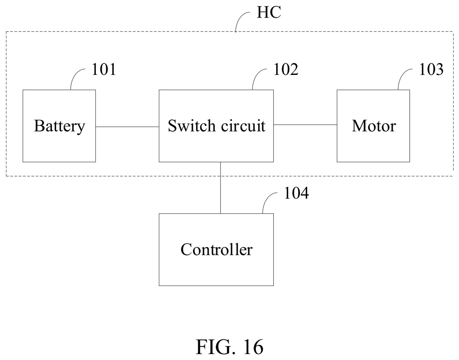

In some embodiments, based on the same inventive concept, embodiments of this application further provide a battery heating circuit. FIG. 16 is a schematic structural diagram of a battery heating circuit according to some other embodiments of this application. As shown in FIG. 16, based on the above embodiments, the battery heating circuit of the embodiments of this application may include: a heating circuit HC and a controller 104, where the heating circuit HC may include a motor 103, a battery 101, and a switch circuit 102 respectively connected to the motor 103 and the battery 101.

The controller 104 is configured to, upon acquiring a heating enable signal, control switching states of switching transistors in the switch circuit in response to the heating enable signal, so as to generate a half-wave current in the motor to heat the battery, where the heating enable signal is configured to indicate that the motor is to heat the battery based on the heating circuit.

In some embodiments, a cycle of the half-wave current includes: a stator winding energy storage stage in which the current gradually increases, a stator winding freewheeling stage in which the current remains constant, a stator winding discharge stage in which the current gradually decreases, and a stator winding current dead-time stage in which the current is zero.

In some embodiments, during the stator winding current dead-time stage in which the current is zero, a capacitor in the heating circuit charges the battery, where the capacitor is connected in series across the terminals of the battery.

In some embodiments, the switch circuit 102 includes three inverter bridge arms disposed between the motor and the battery and respectively connected to the three-phase stator winding of the motor and a capacitor connected in parallel with the three inverter bridge arms, each inverter bridge arm including: an upper bridge arm switching transistor and a lower bridge arm switching transistor; where
when the motor is in a stator winding energy storage stage, an upper bridge arm switching transistor in a target inverter bridge arm among the three inverter bridge arms is in the on state, and lower bridge arm switching transistors in other inverter bridge arms are in the on state;
when the motor is in a stator winding freewheeling stage, the upper bridge arm switching transistor in the target inverter bridge arm switches to the off state, and the lower bridge arm switching transistors in the other inverter bridge arms remain in the on state;
when the motor is in a stator winding discharge stage, the lower bridge arm switching transistors in the other inverter bridge arms switch to the off state; and
when the motor is in a stator winding current dead-time stage, the lower bridge arm switching transistors in the other inverter bridge arms remain in the off state.

In some embodiments, the controller 104 is specifically configured to:
control the upper bridge arm switching transistor in the target inverter bridge arm to be in the on state and the lower bridge arm switching transistors in the other inverter bridge arms to be in the on state, forming a discharge path from the battery to the motor, so that the motor is in the stator winding energy storage stage;
upon detecting that an operating state of the motor satisfies a preset freewheeling condition, control the upper bridge arm switching transistor in the on state to switch to the off state to disconnect the discharge path from the battery to the motor, so that the motor is in the stator winding freewheeling stage;
upon detecting that a duration of the freewheeling stage exceeds a preset freewheeling duration, control the lower bridge arm switching transistors in the on state to switch to the off state, forming a charging path from the motor to the battery, so that the motor is in the stator winding discharge stage to heat the battery; and
upon detecting that energy stored in the stator windings of the motor is fully released, control the lower bridge arm switching transistors to remain in the off state, forming an energy oscillation path between the capacitor and the battery, so that the motor is in the stator winding current dead-time stage.

In some embodiments, the controller 104 is further configured to:
determine the target inverter bridge arm based on a rotor position of the motor.

In some embodiments, the controller 104 is specifically configured to:
acquire space vector data, the switch state space vector data including a plurality of space sectors, where each space sector corresponds to different switch state information;
determine a first space sector in which a rotor of the motor is located and a second space sector symmetrical to the first space sector; and
determine the target inverter bridge arm based on switch state information corresponding to the first space sector and the second space sector.

In some embodiments, the switch circuit 102 includes: a neutral bridge arm disposed between a neutral line of the motor and the battery, three inverter bridge arms disposed between the motor and the battery and respectively connected to the three-phase stator winding of the motor, and a capacitor connected in parallel with the three inverter bridge arms, each inverter bridge arm including: an upper bridge arm switching transistor and a lower bridge arm switching transistor, and the neutral bridge arm including an upper bridge arm switching transistor and a lower bridge arm switching transistor; where
when the motor is in the stator winding energy storage stage, the upper bridge arm switching transistor in each of the inverter bridge arms is in the on state, and the lower bridge arm switching transistor in the neutral bridge arm is in the on state; or the lower bridge arm switching transistor in each of the inverter bridge arms is in the on state, and the upper bridge arm switching transistor in the neutral bridge arm is in the on state;
when the motor is in the stator winding freewheeling stage, the upper bridge arm switching transistor in each of the inverter bridge arms switches to the off state, and the lower bridge arm switching transistor in the neutral bridge arm remains in the on state; or the lower bridge arm switching transistor in each of the inverter bridge arms switches to the off state, and the upper bridge arm switching transistor in the neutral bridge arm remains in the on state;
when the motor is in the stator winding discharge stage, the lower bridge arm switching transistor in the neutral bridge arm is in the off state; or the upper bridge arm switching transistor in the neutral bridge arm is in the off state; and
when the motor is in the stator winding current dead-time stage, the lower bridge arm switching transistor in the neutral bridge arm remains in the off state; or the upper bridge arm switching transistor in the neutral bridge arm remains in the off state.

In some embodiments, the controller 104 is specifically configured to:
control the upper bridge arm switching transistor in each of the inverter bridge arms to be in the on state and the lower bridge arm switching transistor in the neutral bridge arm to be in the on state, forming a discharge path from the battery to the motor, so that the motor is in the stator winding energy storage stage; or
control the lower bridge arm switching transistor in each of the inverter bridge arms to be in the on state and the upper bridge arm switching transistor in the neutral bridge arm to be in the on state, forming a discharge path from the battery to the motor, so that the motor is in the stator winding energy storage stage.

In some embodiments, the controller 104 is specifically configured to:
upon detecting that an operating state of the motor satisfies a preset freewheeling condition, control the upper bridge arm switching transistor in each of the inverter bridge arms to switch to the off state to disconnect the discharge path from the battery to the motor, so that the motor is in the stator winding freewheeling stage; or
upon detecting that the operating state of the motor satisfies the preset freewheeling condition, control the lower bridge arm switching transistor in each of the inverter bridge arms to switch to the off state to disconnect the discharge path from the battery to the motor, so that the motor is in the stator winding freewheeling stage.

In some embodiments, the controller 104 is specifically configured to:
upon detecting that a duration of the freewheeling stage exceeds a preset freewheeling duration, control the lower bridge arm switching transistor in the neutral bridge arm to switch to the off state, forming a charging path from the motor to the battery, so that the motor is in the stator winding discharge stage; or
upon detecting that the duration of the freewheeling stage exceeds the preset freewheeling duration, control the upper bridge arm switching transistor in the neutral bridge arm to switch to the off state, forming a charging path from the motor to the battery, so that the motor is in the stator winding discharge stage.

In some embodiments, the controller 104 is specifically configured to:
upon detecting that energy stored in the stator windings of the motor is fully released, control the lower bridge arm switching transistor in the neutral bridge arm to remain in the off state, forming an energy oscillation path between the capacitor and the battery, so that the motor is in the stator winding current dead-time stage; or
upon detecting that the energy stored in the stator windings of the motor is fully released, control the upper bridge arm switching transistor in the neutral bridge arm to remain in the off state, forming an energy oscillation path between the capacitor and the battery, so that the motor is in the stator winding current dead-time stage.

In some embodiments, the switching transistors in the switch circuit 102 include: insulated gate bipolar transistors IGBT or silicon carbide transistors.

In some embodiments, the controller 104 is specifically configured to:
upon detecting that a battery heating condition is satisfied and the motor is in a non-operating state, generate the heating enable signal; or
receive the heating enable signal sent by a vehicle controller, where the heating enable signal is sent by the vehicle controller upon receiving a heating request from a battery management system BMS and detecting that the motor is in a non-operating state.

In some embodiments, the controller 104 is further configured to:
upon detecting that a temperature of the battery is abnormal or the temperature of the battery reaches a preset temperature, control the switching transistors in the switch circuit to be in the off state; or
upon receiving a battery temperature abnormality signal or a stop heating enable signal sent by the vehicle controller, control the switching transistors in the switch circuit to be in the off state.

The battery heating circuit provided in the embodiments of this application can be used in the technical solutions of the battery heating method embodiments described above, with similar implementation principles and technical effects, which are not repeated here.

In some embodiments, an electric device is further provided, including the battery heating circuit provided in any of the above embodiments of this application, with similar implementation principles and technical effects, which are not repeated here.

As an example, the electric devices involved in the embodiments of this application may include but are not limited to electric scooters, electric vehicles, and the like.

Those skilled in the art can understand that all or part of the processes in the methods of the above embodiments can be implemented by instructing relevant hardware through a computer program. The computer program can be stored in a non-volatile computer-readable storage medium. When executed, the computer program may include the processes of the embodiments of the methods described above. Any reference to a memory, a database, or another medium used in the embodiments provided in this application may include at least one of a non-volatile memory and a volatile memory. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, and the like. The volatile memory may include a random access memory (Random Access Memory, RAM), an external cache memory, or the like. As an illustration but not limitation, the RAM can be in multiple forms, such as a static random access memory (Static Random Access Memory, SRAM) or a dynamic random access memory (Dynamic Random Access Memory, DRAM). The processor involved in the embodiments provided in this application may be a general-purpose processor, a central processing unit, a graphics processor, a digital signal processor, a programmable logic device, a quantum computing-based data processing logic device, or the like, which is not limited thereto.

Finally, it should be noted that the above embodiments are only used to illustrate the technical solutions of this application and not to limit them; although this application has been described in detail with reference to the foregoing embodiments, those skilled in the art should understand that they can still modify the technical solutions described in the foregoing embodiments or make equivalent replacements for some or all of the technical features; such modifications or replacements do not cause the essence of the corresponding technical solutions to depart from the scope of the technical solutions of the embodiments of this application, and they should be included within the scope of the claims and specification of this application. In particular, as long as there is no structural conflict, the technical features mentioned in the various embodiments can be combined in any manner. This application is not limited to the specific embodiments disclosed in the specification but includes all technical solutions falling within the scope of the claims.

## Claims

1. A battery heating method, **characterized by** comprising:
acquiring a heating enable signal, wherein the heating enable signal is configured to indicate that a motor is to heat a battery based on a heating circuit, the heating circuit comprising the motor, the battery, and a switch circuit respectively connected to the motor and the battery;
controlling switching states of switching transistors in the switch circuit in response to the heating enable signal, so as to generate a half-wave current in the motor to heat the battery.

2. The method according to claim 1, **characterized in that** a cycle of the half-wave current comprises: a stator winding energy storage stage in which the current gradually increases, a stator winding freewheeling stage in which the current remains constant, a stator winding discharge stage in which the current gradually decreases, and a stator winding current dead-time stage in which the current is zero.

3. The method according to claim 2, **characterized in that** during the stator winding current dead-time stage in which the current is zero, a capacitor in the heating circuit charges the battery, wherein the capacitor is connected in series across the terminals of the battery.

4. The method according to any one of claims 1 to 3, **characterized in that** the switch circuit comprises three inverter bridge arms disposed between the motor and the battery and respectively connected to the three-phase stator winding of the motor and a capacitor connected in parallel with the three inverter bridge arms, each inverter bridge arm comprising: an upper bridge arm switching transistor and a lower bridge arm switching transistor; wherein
when the motor is in a stator winding energy storage stage, an upper bridge arm switching transistor in a target inverter bridge arm among the three inverter bridge arms is in the on state, and lower bridge arm switching transistors in other inverter bridge arms are in the on state;
when the motor is in a stator winding freewheeling stage, the upper bridge arm switching transistor in the target inverter bridge arm switches to the off state, and the lower bridge arm switching transistors in the other inverter bridge arms remain in the on state;
when the motor is in a stator winding discharge stage, the lower bridge arm switching transistors in the other inverter bridge arms switch to the off state; and
when the motor is in a stator winding current dead-time stage, the lower bridge arm switching transistors in the other inverter bridge arms remain in the off state.

5. The method according to claim 4, **characterized in that** the controlling switching states of switching transistors in the switch circuit in response to the heating enable signal comprises:
controlling the upper bridge arm switching transistor in the target inverter bridge arm to be in the on state and the lower bridge arm switching transistors in the other inverter bridge arms to be in the on state, forming a discharge path from the battery to the motor, so that the motor is in the stator winding energy storage stage;
upon detecting that an operating state of the motor satisfies a preset freewheeling condition, controlling the upper bridge arm switching transistor in the on state to switch to the off state to disconnect the discharge path from the battery to the motor, so that the motor is in the stator winding freewheeling stage;
upon detecting that a duration of the freewheeling stage exceeds a preset freewheeling duration, controlling the lower bridge arm switching transistors in the on state to switch to the off state, forming a charging path from the motor to the battery, so that the motor is in the stator winding discharge stage; and
upon detecting that energy stored in the stator windings of the motor is fully released, controlling the lower bridge arm switching transistors to remain in the off state, forming an energy oscillation path between the capacitor and the battery, so that the motor is in the stator winding current dead-time stage.

6. The method according to claim 5, **characterized in that** before the controlling the upper bridge arm switching transistor in the target inverter bridge arm to be in the on state and the lower bridge arm switching transistors in the other inverter bridge arms to be in the on state, the method further comprises:
determining the target inverter bridge arm based on a rotor position of the motor.

7. The method according to claim 6, **characterized in that** the determining the target inverter bridge arm based on a rotor position of the motor comprises:
acquiring space vector data, the switch state space vector data comprising a plurality of space sectors, wherein each space sector corresponds to different switch state information;
determining a first space sector in which a rotor of the motor is located and a second space sector symmetrical to the first space sector; and
determining the target inverter bridge arm based on switch state information corresponding to the first space sector and the second space sector.

8. The method according to any one of claims 1 to 3, **characterized in that** the switch circuit comprises: a neutral bridge arm disposed between a neutral line of the motor and the battery, three inverter bridge arms disposed between the motor and the battery and respectively connected to the three-phase stator winding of the motor, and a capacitor connected in parallel with the three inverter bridge arms, each inverter bridge arm comprising: an upper bridge arm switching transistor and a lower bridge arm switching transistor, and the neutral bridge arm comprising an upper bridge arm switching transistor and a lower bridge arm switching transistor; wherein
when the motor is in a stator winding energy storage stage, the upper bridge arm switching transistor in each of the inverter bridge arms is in the on state, and the lower bridge arm switching transistor in the neutral bridge arm is in the on state; or the lower bridge arm switching transistor in each of the inverter bridge arms is in the on state, and the upper bridge arm switching transistor in the neutral bridge arm is in the on state;
when the motor is in a stator winding freewheeling stage, the upper bridge arm switching transistor in each of the inverter bridge arms switches to the off state, and the lower bridge arm switching transistor in the neutral bridge arm remains in the on state; or the lower bridge arm switching transistor in each of the inverter bridge arms switches to the off state, and the upper bridge arm switching transistor in the neutral bridge arm remains in the on state;
when the motor is in a stator winding discharge stage, the lower bridge arm switching transistor in the neutral bridge arm switches to the off state; or the upper bridge arm switching transistor in the neutral bridge arm switches to the off state; and
when the motor is in a stator winding current dead-time stage, the lower bridge arm switching transistor in the neutral bridge arm remains in the off state; or the upper bridge arm switching transistor in the neutral bridge arm remains in the off state.

9. The method according to claim 8, **characterized in that** the controlling switching states of switching transistors in the switch circuit in response to the heating enable signal comprises:
controlling the upper bridge arm switching transistor in each of the inverter bridge arms to be in the on state and the lower bridge arm switching transistor in the neutral bridge arm to be in the on state, forming a discharge path from the battery to the motor, so that the motor is in the stator winding energy storage stage; or
controlling the lower bridge arm switching transistor in each of the inverter bridge arms to be in the on state and the upper bridge arm switching transistor in the neutral bridge arm to be in the on state, forming a discharge path from the battery to the motor, so that the motor is in the stator winding energy storage stage.

10. The method according to claim 8, **characterized in that** the controlling switching states of switching transistors in the switch circuit in response to the heating enable signal comprises:
upon detecting that an operating state of the motor satisfies a preset freewheeling condition, controlling the upper bridge arm switching transistor in each of the inverter bridge arms to switch to the off state to disconnect the discharge path from the battery to the motor, so that the motor is in the stator winding freewheeling stage; or
upon detecting that the operating state of the motor satisfies the preset freewheeling condition, controlling the lower bridge arm switching transistor in each of the inverter bridge arms to switch to the off state to disconnect the discharge path from the battery to the motor, so that the motor is in the stator winding freewheeling stage.

11. The method according to claim 8, **characterized in that** the controlling switching states of switching transistors in the switch circuit in response to the heating enable signal comprises:
upon detecting that a duration of the freewheeling stage exceeds a preset freewheeling duration, controlling the lower bridge arm switching transistor in the neutral bridge arm to switch to the off state, forming a charging path from the motor to the battery, so that the motor is in the stator winding discharge stage; or
upon detecting that the duration of the freewheeling stage exceeds the preset freewheeling duration, controlling the upper bridge arm switching transistor in the neutral bridge arm to switch to the off state, forming a charging path from the motor to the battery, so that the motor is in the stator winding discharge stage.

12. The method according to claim 8, **characterized in that** the controlling switching states of switching transistors in the switch circuit in response to the heating enable signal comprises:
upon detecting that energy stored in the stator windings of the motor is fully released, controlling the lower bridge arm switching transistor in the neutral bridge arm to remain in the off state, forming an energy oscillation path between the capacitor and the battery, so that the motor is in the stator winding current dead-time stage; or
upon detecting that the energy stored in the stator windings of the motor is fully released, controlling the upper bridge arm switching transistor in the neutral bridge arm to remain in the off state, forming an energy oscillation path between the capacitor and the battery, so that the motor is in the stator winding current dead-time stage.

13. The method according to any one of claims 1 to 12, **characterized in that** the acquiring a heating enable signal comprises:
upon detecting that a battery heating condition is satisfied and the motor is in a non-operating state, generating the heating enable signal; or
receiving the heating enable signal sent by a vehicle controller, wherein the heating enable signal is sent by the vehicle controller upon receiving a heating request from a battery management system BMS and detecting that the motor is in a non-operating state.

14. The method according to any one of claims 1 to 12, **characterized in that** the method further comprises:
upon detecting that a temperature of the battery is abnormal or the temperature of the battery reaches a preset temperature, controlling the switching transistors in the switch circuit to be in the off state.

15. The method according to any one of claims 1 to 12, **characterized in that** the method further comprises:
upon receiving a battery temperature abnormality signal or a stop heating enable signal sent by a vehicle controller, controlling the switching transistors in the switch circuit to be in the off state.

16. A battery heating circuit, **characterized in that** the battery heating circuit comprises a heating circuit and a controller, wherein the heating circuit comprises a motor, a battery, and a switch circuit respectively connected to the motor and the battery; and
the controller is configured to, upon acquiring a heating enable signal, control switching states of switching transistors in the switch circuit in response to the heating enable signal, so as to generate a half-wave current in the motor to heat the battery, wherein the heating enable signal is configured to indicate that the motor is to heat the battery based on the heating circuit.

17. The battery heating circuit according to claim 16, **characterized in that** a cycle of the half-wave current comprises: a stator winding energy storage stage in which the current gradually increases, a stator winding freewheeling stage in which the current remains constant, a stator winding discharge stage in which the current gradually decreases, and a stator winding current dead-time stage in which the current is zero.

18. The battery heating circuit according to claim 17, **characterized in that** during the stator winding current dead-time stage in which the current is zero, a capacitor in the heating circuit charges the battery, wherein the capacitor is connected in series across the terminals of the battery.

19. The battery heating circuit according to any one of claims 16 to 18, **characterized in that** the switch circuit comprises three inverter bridge arms disposed between the motor and the battery and respectively connected to the three-phase stator winding of the motor and a capacitor connected in parallel with the three inverter bridge arms, each inverter bridge arm comprising: an upper bridge arm switching transistor and a lower bridge arm switching transistor; wherein
when the motor is in a stator winding energy storage stage, an upper bridge arm switching transistor in a target inverter bridge arm among the three inverter bridge arms is in the on state, and lower bridge arm switching transistors in other inverter bridge arms are in the on state;
when the motor is in a stator winding freewheeling stage, the upper bridge arm switching transistor in the target inverter bridge arm switches to the off state, and the lower bridge arm switching transistors in the other inverter bridge arms remain in the on state;
when the motor is in a stator winding discharge stage, the lower bridge arm switching transistors in the other inverter bridge arms switch to the off state; and
when the motor is in a stator winding current dead-time stage, the lower bridge arm switching transistors in the other inverter bridge arms remain in the off state.

20. The battery heating circuit according to claim 19, **characterized in that** the controller is configured to:
control the upper bridge arm switching transistor in the target inverter bridge arm to be in the on state and the lower bridge arm switching transistors in the other inverter bridge arms to be in the on state, forming a discharge path from the battery to the motor, so that the motor is in the stator winding energy storage stage;
upon detecting that an operating state of the motor satisfies a preset freewheeling condition, control the upper bridge arm switching transistor in the on state to switch to the off state to disconnect the discharge path from the battery to the motor, so that the motor is in the stator winding freewheeling stage;
upon detecting that a duration of the freewheeling stage exceeds a preset freewheeling duration, control the lower bridge arm switching transistors in the on state to switch to the off state, forming a charging path from the motor to the battery, so that the motor is in the stator winding discharge stage to heat the battery; and
upon detecting that energy stored in the stator windings of the motor is fully released, control the lower bridge arm switching transistors to remain in the off state, forming an energy oscillation path between the capacitor and the battery, so that the motor is in the stator winding current dead-time stage.

21. The battery heating circuit according to claim 20, **characterized in that** the controller is further configured to:
determine the target inverter bridge arm based on a rotor position of the motor.

22. The battery heating circuit according to claim 21, **characterized in that** the controller is specifically configured to:
acquire space vector data, the switch state space vector data comprising a plurality of space sectors, wherein each space sector corresponds to different switch state information;
determine a first space sector in which a rotor of the motor is located and a second space sector symmetrical to the first space sector; and
determine the target inverter bridge arm based on switch state information corresponding to the first space sector and the second space sector.

23. The battery heating circuit according to any one of claims 16 to 18, **characterized in that** the switch circuit comprises: a neutral bridge arm disposed between a neutral line of the motor and the battery, three inverter bridge arms disposed between the motor and the battery and respectively connected to the three-phase stator winding of the motor, and a capacitor connected in parallel with the three inverter bridge arms, each inverter bridge arm comprising: an upper bridge arm switching transistor and a lower bridge arm switching transistor, the neutral bridge arm comprising an upper bridge arm switching transistor and a lower bridge arm switching transistor; wherein
when the motor is in a stator winding energy storage stage, the upper bridge arm switching transistor in each of the inverter bridge arms is in the on state, and the lower bridge arm switching transistor in the neutral bridge arm is in the on state; or the lower bridge arm switching transistor in each of the inverter bridge arms is in the on state, and the upper bridge arm switching transistor in the neutral bridge arm is in the on state;
when the motor is in a stator winding freewheeling stage, the upper bridge arm switching transistor in each of the inverter bridge arms switches to the off state, and the lower bridge arm switching transistor in the neutral bridge arm remains in the on state; or the lower bridge arm switching transistor in each of the inverter bridge arms switches to the off state, and the upper bridge arm switching transistor in the neutral bridge arm remains in the on state;
when the motor is in a stator winding discharge stage, the lower bridge arm switching transistor in the neutral bridge arm is in the off state; or the upper bridge arm switching transistor in the neutral bridge arm is in the off state; and
when the motor is in a stator winding current dead-time stage, the lower bridge arm switching transistor in the neutral bridge arm remains in the off state; or the upper bridge arm switching transistor in the neutral bridge arm remains in the off state.

24. The battery heating circuit according to claim 23, **characterized in that** the controller is specifically configured to:
control the upper bridge arm switching transistor in each of the inverter bridge arms to be in the on state and the lower bridge arm switching transistor in the neutral bridge arm to be in the on state, forming a discharge path from the battery to the motor, so that the motor is in the stator winding energy storage stage; or
control the lower bridge arm switching transistor in each of the inverter bridge arms to be in the on state and the upper bridge arm switching transistor in the neutral bridge arm to be in the on state, forming a discharge path from the battery to the motor, so that the motor is in the stator winding energy storage stage.

25. The battery heating circuit according to claim 23, **characterized in that** the controller is specifically configured to:
upon detecting that an operating state of the motor satisfies a preset freewheeling condition, control the upper bridge arm switching transistor in each of the inverter bridge arms to switch to the off state to disconnect the discharge path from the battery to the motor, so that the motor is in the stator winding freewheeling stage; or
upon detecting that the operating state of the motor satisfies the preset freewheeling condition, control the lower bridge arm switching transistor in each of the inverter bridge arms to switch to the off state to disconnect the discharge path from the battery to the motor, so that the motor is in the stator winding freewheeling stage.

26. The battery heating circuit according to claim 23, **characterized in that** the controller is specifically configured to:
upon detecting that a duration of the freewheeling stage exceeds a preset freewheeling duration, control the lower bridge arm switching transistor in the neutral bridge arm to switch to the off state, forming a charging path from the motor to the battery, so that the motor is in the stator winding discharge stage; or
upon detecting that the duration of the freewheeling stage exceeds the preset freewheeling duration, control the upper bridge arm switching transistor in the neutral bridge arm to switch to the off state, forming a charging path from the motor to the battery, so that the motor is in the stator winding discharge stage.

27. The battery heating circuit according to claim 23, **characterized in that** the controller is specifically configured to:
upon detecting that energy stored in the stator windings of the motor is fully released, control the lower bridge arm switching transistor in the neutral bridge arm to remain in the off state, forming an energy oscillation path between the capacitor and the battery, so that the motor is in the stator winding current dead-time stage; or
upon detecting that the energy stored in the stator windings of the motor is fully released, control the upper bridge arm switching transistor in the neutral bridge arm to remain in the off state, forming an energy oscillation path between the capacitor and the battery, so that the motor is in the stator winding current dead-time stage.

28. The battery heating circuit according to any one of claims 16 to 27, **characterized in that** the switching transistors in the switch circuit comprise: insulated gate bipolar transistors IGBT or silicon carbide transistors.

29. The battery heating circuit according to any one of claims 16 to 27, **characterized in that** the controller is specifically configured to:
upon detecting that a battery heating condition is satisfied and the motor is in a non-operating state, generate the heating enable signal; or
receive the heating enable signal sent by a vehicle controller, wherein the heating enable signal is sent by the vehicle controller upon receiving a heating request from a battery management system BMS and detecting that the motor is in a non-operating state.

30. The battery heating circuit according to any one of claims 16 to 27, **characterized in that** the controller is further configured to:
upon detecting that a temperature of the battery is abnormal or the temperature of the battery reaches a preset temperature, control the switching transistors in the switch circuit to be in the off state; or
upon receiving a battery temperature abnormality signal or a stop heating enable signal sent by a vehicle controller, control the switching transistors in the switch circuit to be in the off state.

31. An electric device, **characterized in that** the electric device comprises the battery heating circuit according to any one of claims 16 to 30.
